# EUROPÄISCHE PATENTSCHRIFT

(11) **EP 3 151 413 B1**
(45) Veröffentlichungstag und Bekanntmachung des Hinweises auf die Patenterteilung: **18.04.2018**
(21) Anmeldenummer: 15188214.9
(22) Anmeldetag: 02.10.2015
(51) Int. Cl.: H02M 7/483

(54) **STEUERVORRICHTUNG UND STEUERVERFAHREN FÜR GROSSE STROMRICHTER**
CONTROL DEVICE AND CONTROL METHOD FOR LARGE POWER CONVERTERS
DISPOSITIF DE COMMANDE ET PROCEDE DE COMMANDE POUR DES GRANDS CONVERTISSEURS DE COURANT

(43) Veröffentlichungstag der Anmeldung: 05.04.2017
(73) Patentinhaber: GE Energy Power Conversion Technology Ltd, Rugby Warwickshire CV21 1BU (GB)
(72) Erfinder: Jebenstreit, Helmut, 12277 Berlin (DE); Wothe, Frank, 12277 Berlin (DE); Niemann, Kai, 12277 Berlin (DE)
(74) Vertreter: Rüger, Barthelt & Abel

(56) Entgegenhaltungen:
- EP-A1- 2 905 884
- US-A1- 2015 204 730
- HUANG SHAOJUN ET AL: "Analysis of communication based distributed control of MMC for HVDC", 2013 15TH EUROPEAN CONFERENCE ON POWER ELECTRONICS AND APPLICATIONS (EPE), IEEE, 2. September 2013 (2013-09-02), Seiten 1-10, XP032505495, DOI: 10.1109/EPE.2013.6634711 [gefunden am 2013-10-16]

## Beschreibung

Die vorliegende Erfindung betrifft allgemein eine Steuervorrichtung und ein Steuerverfahren zur Steuerung sehr großer Stromrichter oder anderer großer leistungselektronischer Geräte und Anlagen, die eine Anzahl von Leistungszellen aufweisen, die Befehle von einer zentralen Steuereinheit empfangen und Informationen zu der zentralen Steuereinheit senden.

Stromrichter werden zur Umwandlung von Gleichstrom in Wechselstrom und umgekehrt für viele Anwendungen, wie z.B. zur Kopplung elektrischer Netze mit drehzahlvariablen Antrieben, zum Energieaustausch zwischen zwei elektrischen Netzen, zur Hochspannungsgleichstrom(HVDC, High Voltage Direct Current)-Übertragung und dgl. verwendet. Hierzu sind Stromrichter in unterschiedlichen Schaltungstopologien und Konfigurationen bekannt. Mit fortwährender Entwicklung von Leistungshalbleiterschaltern werden stets neuere Stromrichtertopologien für immer höhere Leistungs- und Spannungsbereiche gewünscht und entwickelt. Im Mittel- und Hochspannungsbereich werden zunehmend sog. Mehrpunktstromrichter eingesetzt, um mehrere Spannungsstufen zu erzeugen und die Spannungen auf höhere Niveaus bis hin in Bereiche der HVDC-Übertragung zu erhöhen.

Eine relativ neuartige Stromrichtertopologie stellt der modulare Mehrpunktstromrichter dar. Dieser Stromrichter weist Phasenmodule auf, die aus zwei in Reihe miteinander verbundenen Zweigen bestehen, wobei jeder Zweig aus einer Anzahl gleichartiger Leistungszellen bzw. Submodulen aufgebaut ist. Jede Leistungszelle ist durch eine Brückenschaltung, z.B. eine Voll- oder H-Brückenschaltung mit ansteuerbaren Leistungshalbleiterschaltern und einem internen Kondensator zur Zwischenspeicherung elektrischer Energie gebildet. Durch die modulare Bauweise ist der Stromrichter für unterschiedliche Leistungen und Anwendungen individuell skalierbar. Ein Stromrichterzweig kann bspw. bis zu oder über 300 Leistungszellen aufweisen, die in einem Zweig in Reihe miteinander verbunden sind. Bei einer dreiphasigen Konfiguration des Stromrichters mit sechs Zweigen können somit 1800 Zellen oder mehr vorhanden sein.

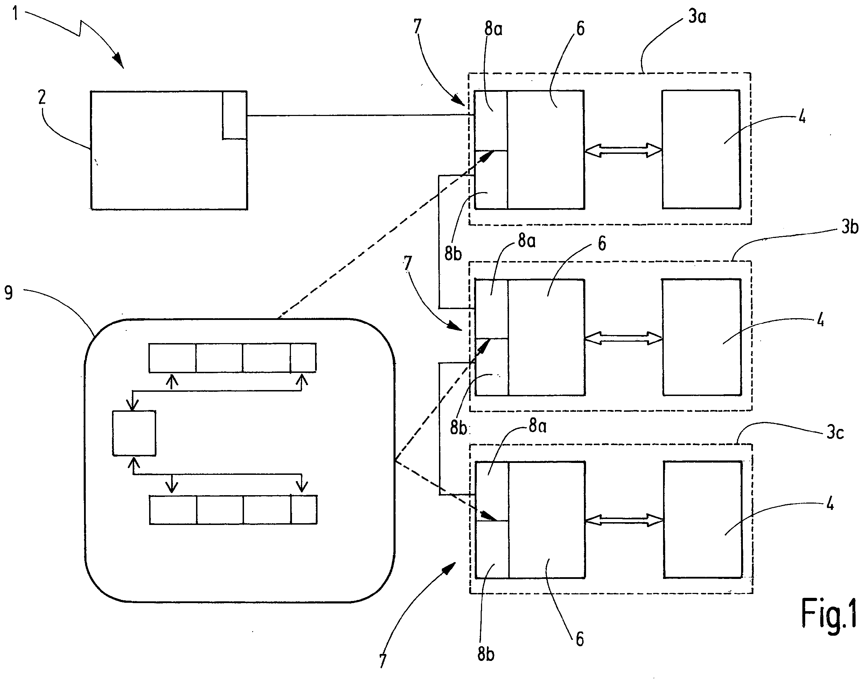

Eine aus der Praxis bekannte Steuervorrichtung für Stromrichter ist in Fig. 1 dargestellt. Eine zentrale Steuereinheit (CPU) 2 ist mit mehreren Leistungszellen 3 kommunikationsmäßig verbunden, die hier in Serie miteinander verbunden sind. Jede Leistungszelle 3 weist einen Leistungshalbleiterschalter oder eine Schaltung, wie bspw. die vorstehend erwähnte H-Brückenschaltung auf, die hier nur durch einen Block 4 dargestellt ist.

Die Leistungszelle 3 enthält ferner eine sog. Remote-Ein-/ Ausgabe(E/A)-Einrichtung 6, die die Ein- und Ausgabeeinrichtung der Leistungszelle bildet. Die Remote-E/A-Einrichtung 6 sendet Schaltbefehle für die Aktuatoren bzw. Leistungshalbleiterschalter der Leistungszelle und empfängt Rückmeldungen von hier nicht näher dargestellten Sensoren der Leistungszelle 3, die bspw. Ströme, Spannungen, Temperatur und andere Parameter in der Leistungszelle 3 erfassen.

Die Remote-E/A-Einrichtung 6 ist mit dem Steuersystem über ein Kommunikationsmodul 7 der Remote-E/A-Einrichtung 6 verbunden, das, wie in Fig. 1 veranschaulicht, zwei Kommunikationsverbindungsanschlüsse 8a, 8b aufweist. In bevorzugten Implementierungen werden die Kommunikationsverbindungen unter Verwendung von 100 Megabit- oder Gigabit-Ethernet auf der Basis von Glasfaserleitungen oder Kupferleitungen realisiert.

In den heutzutage bekannten und eingesetzten Implementierungen derartiger Kommunikationssysteme sind die Remote-E/A-Einrichtungen 6 in der aus Fig. 1 ersichtlichen Linientopologie miteinander verbunden. Hierbei ist die zentrale Steuereinheit CPU 2 mit einem ersten Kommunikationsanschluss 8a einer Remote-E/A-Einrichtung 6 einer ersten Leistungszelle 3a verbunden. Die Leistungszelle 3a ist über ihren zweiten Kommunikationsanschluss 8b mit dem ersten Anschluss 8a der Remote-E/A-Einrichtung 6 der zweiten Leistungszelle 3b kommunikationsmäßig verbunden. Die zweite Leistungszelle 3b ist über ihren zweiten Kommunikationsanschluss 8b mit der Remote-E/A-Einrichtung 6 einer dritten Leistungszelle 3c verbunden, usw. Abgesehen von der CPU und den Remote-E/A-Einrichtungen sind hier keine weiteren Einrichtungen für die Kommunikation erforderlich. Dies ist kostengünstig und einfach für kleinere Systeme und hat sich in vielen Systemen im Einsatz als zuverlässig und gut funktionierend erwiesen.

Eine derartige Linientopologie eines industriellen Bussystems mit einem Master-Knoten, z.B. einer CPU, und mehreren Slave-Knoten zum Betreiben von Hochleistungshalbleiterschaltern, wobei die Slave-Knoten über Datenleitungen in Serie miteinander verbunden sind, ist bspw. aus der DE 10 2013 207 826 B3 bekannt. Hier ist der Master-Knoten an einem Ende der Serie von Slave-Knoten angeordnet. Ein Ausgangsdatenrahmen wird in die Ausgangsrichtung ausgehend von dem Master-Knoten bis zu dem letzten, von dem Master-Knoten am weitesten entfernten Slave-Knoten gesendet und durchläuft alle dazwischen angeschlossenen Slave-Knoten, während ausgehend von dem letzten Slave-Knoten als Antwort auf den Ausgangsdatenrahmen ein Eingangsdatenrahmen in die Eingangsrichtung hin zu dem Master-Knoten über alle dazwischen liegenden Slave-Knoten übermittelt wird, die dem Eingangsdatenrahmen Informationen hinzufügen können. EP2905884A1 zeigt eine Vorrichtung gemäss dem Obenbegriff des Anspruchs 1. Es gibt verschiedene Verfahren für die Kommunikation in derartigen Steuerungssystemen, wie in Fig. 1 veranschaulicht. Im Allgemeinen wird für die Übertragung von Echtzeit-Ein- und Ausgabedaten ein Senderahmen (Tx) und ein Empfangsrahmen (Rx) pro Zyklus übertragen. Es sind auch andere Verfahren möglich, die bspw. die Sende- und Empfangsinformationen in einem einzigen Rahmen kombinieren oder die Informationen auf mehr als einen einzigen Sende- oder Empfangsrahmen aufteilen. Unabhängig von der Kommunikationsprozedur können in derartigen Systemen verschiedene Adressierungsmodi erforderlich und verfügbar sein. Die Adressierungsmodi können mit verschiedenen Betriebszuständen des Systems verknüpft sein. Für eine höhere Anzahl von Remote-E/A-Einrichtungen wird es aber bevorzugt, keine Adressierungsinformationen in dem Echtzeit-Kommunikationsrahmen zu übertragen. Bei bspw. 300 Leistungszellen 3 bzw. Remote-E/A-Einrichtungen 6, wie in Fig. 1 veranschaulicht, und zwei Bytes pro Adressinformation, würden die gesamten Adressinformationen insgesamt 600 Bytes benötigen.

In einem bekannten Kommunikationsverfahren wird deshalb auf die Adressierungsinformationen in den Sende- und Empfangsrahmen verzichtet. Jede Einheit weiß, an welcher Stelle in dem Senderahmen sie die für sie relevanten Informationen (T-RIOn) extrahieren soll und an welcher Stelle in dem Empfangsrahmen sie Rückmeldeinformationen (R-RIOn) einfügen soll. Diese Funktion, die auch als Kommunikationssteuerungs- und -verwaltung oder kurz CCM (Communication Control Manager) bezeichnet wird, ist in dem Kommunikationsmodul 7 der Remote-E/A-Einrichtung 6 integriert, wie in Fig. 1 mit dem Bezugszeichen 9 angezeigt.

Für große Stromrichter, wie eingangs erwähnt, sind die Steuerungsleistung und Einsatzfähigkeit sehr wichtig. Für die Steuerungsleistung wird z.B. eine Steuerungszykluszeit von 100 Mikrosekunden angenommen, die die Übertragung des Senderahmens, den Steuerungsvorgang, die Übertragung des Empfangsrahmens und eine kurze Pausenzeit zwischen zwei Zyklen umfasst. Bei einer Kommunikationsverzögerungszeit von nur 0,3 Mikrosekunden pro Remote-E/A-Einrichtung und 300 Remote-E/A-Einrichtungen würde aber jeder Sende- und Empfangsrahmen eine gesamte Verzögerungszeit von 90 Mikrosekunden erfahren. Es ist offensichtlich, dass bei einer derartigen Verzögerung die Steuerungsleistungsanforderungen bei einem großen Stromrichter unter Verwendung einer logischen Linientopologie nicht mehr erfüllt werden können.

Eine gute Einsatzfähigkeit bzw. Betriebsbereitschaft wird bei derartigen Systemen auf der Leistungselektronikseite mittels redundanter Leistungszellen erreicht. Bei der Systemauslegung wird eine Anzahl x von Leistungszellen definiert, die zulässigerweise ausfallen kann, bevor das System abgeschaltet werden muss. Bei einem Verlust von bis zu x Leistungszellen sollte das System weiterhin kontinuierlich ohne Unterbrechung und ohne die Notwendigkeit einer Reparaturmaßnahme weiter arbeiten. Eine redundante Auslegung der Anzahl von Leistungszellen kann mit einer physikalischen Linientopologie von Remote-E/A-Einrichtungen in Konflikt stehen.

Ausgehend hiervon ist es eine Aufgabe der vorliegenden Erfindung eine Steuervorrichtung und ein Steuerverfahren zu schaffen, die sich zur Steuerung leistungselektronischer Geräte bzw. Anlagen mit einer großen Anzahl von Leistungszellen, insbesondere für große Stromrichter mit einer großen Anzahl von Leistungshalbleiterschaltelementen eignen. Insbesondere sollten die Steuervorrichtung und das Steuerverfahren gute Ein- und Ausgabefähigkeiten und hohe Steuerungsleistungen ermöglichen. Vorzugsweise sollten sie auch für redundante Systeme geeignet sein.

Diese Aufgabe wird durch die Steuervorrichtung mit den Merkmalen des Anspruchs 1 und ein Verfahren nach Anspruch 13 gelöst.

Gemäß einem Aspekt der Erfindung ist eine Steuervorrichtung für einen Stromrichter geschaffen, der eine Anzahl von Leistungszellen aufweist, die jeweils wenigstens ein Leistungshalbleiterschaltelement und eine Remote-Ein-/Ausgabe (E/A)-Einrichtung zur Kommunikation mit einer zentralen Steuereinheit aufweisen, um von der zentralen Steuereinheit Informationen, einschließlich Befehle zum Schalten des wenigstens einen Leistungshalbleiterschaltelementes zu empfangen und Rückmeldeinformationen von der Leistungszelle an die zentrale Steuereinheit zu senden. Die Steuervorrichtung weist wenigstens eine Multiplexer/Demultiplexer(MDM)-Einrichtung, die einen Uplink-Anschluss zur Verbindung mit einer zentralen Steuereinheit, mehrere Downlink-Anschlüsse zur Direktverbindung mit jeweils einer Remote-E/A-Einrichtung einer zugeordneten Leistungszelle und ein Kommunikationssteuerungs- und -verwaltungsmodul auf. Das Kommunikationssteuerungs- und -verwaltungsmodul ist dazu eingerichtet, Informationen, die jeweilige Leistungszellen betreffen, aus einem von der zentralen Steuereinheit über den Uplink-Anschluss empfangenen Senderahmen zu extrahieren und dem jeweiligen Downlink-Anschluss für die betreffende Leistungszelle zuzuführen und von jeweiligen Leistungszellen erhaltene Rückmeldeinformationen in einen Empfangsrahmen einzufügen und über den Uplink-Anschluss zu der zentralen Steuereinheit zu senden.

Die Erfindung verwendet eine kaskadierbare Multiplexer/Demultiplexer(MDM)-Einrichtung, die zwischen einer zentralen Steuereinheit und den Leistungszellen mit ihren integrierten Remote-Ein- und Ausgabe(E/A)-Einrichtungen eingefügt ist und die wenigstens einen Uplink-Anschluss zur Verbindung mit der zentralen Steuereinheit und mehrere, vorzugsweise bis zu 20 oder sogar mehr Downlink-Anschlüsse für die Ein- und Ausgabe-Steuerung zu den Leistungszellen aufweist. Als Uplink wird in der fachüblichen Terminologie eine Verbindung mit Datenfluss vom Teilnehmer zum Netz, hier von einer Leistungszelle in Richtung zu der zentralen Steuereinheit, verstanden. Entsprechend bezeichnet ein Downlink eine Verbindung mit Datenflussrichtung vom Netz und Teilnehmer, also von der zentralen Steuereinheit in Richtung der Leistungszellen. Die Konfiguration der MDM-Einrichtung mit wenigstens einem Uplink und mehreren Downlinks und einer Logik zum Managen des Datenflusses, um Datenrahmen von der zentralen Steuereinheit auf die jeweiligen Downlink-Anschlüsse passend aufzuteilen und die Rückmeldedaten der Leistungszellen zum Senden an die zentrale Steuereinheit passend zusammenzupacken, schafft die Basis für eine kaskadierte Steuerungstopologie bzw. -architektur, die schnelle Übertragungszeiten mit geringen Verzögerungszeiten von der zentralen Steuereinheit zu allen Leistungszellen und umgekehrt ermöglicht.

Jede Remote-E/A-Einrichtung ist direkt über eine Verbindung an den Downlink-Anschluss einer MDM-Einrichtung angeschlossen. Es existiert keine logische oder physikalische Linientopologie für die Remote-E/A-Einrichtungen. Außerdem ist die Funktionalität des Kommunikationssteuerungs- und -verwaltungs-moduls vorteilhafterweise in der MDM-Einrichtung integriert. Das in der MDM-Einrichtung ansässige Kommunikationssteuerungs- und -verwaltungsmodul extrahiert aus dem über den Uplink-Anschluss empfangenen Senderahmen die für jeden Downlink-Anschluss und die daran angeschlossene Leistungszelle bestimmten Informationen und packt auch alle Empfangsrahmen, die Rückmeldeinformationen von den Leistungszellen enthalten, in der richtigen Form zusammen, um sie über den Uplink-Anschluss zu der zentralen Steuereinheit zu senden. Die MDM-Einrichtung mit dem integrierten Kommunikationssteuerungs- und -verwaltungsmodul ermöglicht gute Eingabe-/Ausgabefähigkeiten und hohe Steuerungsleistungen.

Die erfindungsgemäße Steuervorrichtung ist für vielfältige große leistungselektronische Geräte und Anlagen, die eine hohe Anzahl von Leistungszellen aufweisen, für unterschiedliche Anwendungen geeignet. In einer bevorzugten Anwendung ist sie für einen mehrphasigen Stromrichter bestimmt und eingerichtet, der eine der Anzahl von Phasen entsprechende Anzahl von Phasenzweigen aufweist, wobei jeder Phasenzweig einen ersten und einen zweiten Zweig aufweist, die in Reihe miteinander verbunden zwischen einem ersten und einem zweiten Gleichspannungsanschluss angeschlossen sind. Der Verbindungspunkt zwischen den Zweigen bildet einen Wechselspannungsanschluss des jeweiligen Phasenzweiges. Jeder Zweig weist eine Vielzahl von Leistungszellen auf, wobei jede Leistungszelle wenigstens ein Leistungshalbleiterschaltelement aufweist. Bspw. können bei einem dreiphasigen Stromrichter sechs Zweige mit z.B. jeweils 300 oder mehr in Reihe miteinander verbundenen Leistungszellen pro Zweig vorhanden sein. Ein derartiger Stromrichter ist z.B. für Hochspannungs-Gleichstrom(HVDC)-Anwendungen gut geeignet.

In einer Konfiguration kann die Leistungszelle eine Voll- oder H-Brückenschaltung mit einem ersten und einem zweiten Brückenzweig aufweisen, wobei jeder Brückenzweig eine zwischen Gleichspannungsklemmen der Brückenschaltung angeschlossene Reihenschaltung aus wenigstens einem ersten und wenigstens einem zweiten Leistungshalbleiterschalter aufweist, deren Verbindungspunkt eine Wechselspannungsklemme der Brückenschaltung bildet. Anstelle der symmetrischen H-Brücke kann auch eine unsymmetrische H-Brückenschaltung verwendet werden, bei denen die Leistungshalbleiterschalter auf einer Brückendiagonale durch Dioden ersetzt sind. Es könnten auch Halbbrücken oder einzelne Hochleistungshalbleiterschaltelemente, z.B. Thyristoren, verwendet werden. Als Leistungshalbleiterschalter können z.B. IGBTs, MOSFETs, IGCTs oder dgl. verwendet werden. Jede Leistungszelle weist vorzugsweise ferner Sensoren auf, die Parameter, wie bspw. Spannungen, Ströme, Temperatur oder dgl., innerhalb oder an der Leistungszelle erfassen, um sie an die zentrale Steuereinheit zu melden.

Zu der Steuervorrichtung im erweiterten Sinne - oder zu einem so geschaffenen Steuersystem - können auch die Remote-E/A-Einrichtungen der angeschlossenen Leistungszellen zählen. Diese sind die einzigen dezentralen Einheiten der ansonsten zentral einrichtbaren Steuervorrichtung bzw. des Steuersystems. Die Remote-E/A-Einrichtungen weisen eine Kommunikationsschnittstelle auf, die angeschlossen und eingerichtet ist, um von der zentralen Steuereinheit empfangene Schaltbefehle an den wenigstens einen Leistungshalbleiterschalter einer zugehörigen Leistungszelle zu senden und als Rückmeldungen Messwerte von Sensoren der Leistungszelle zu empfangen und an die zentrale Steuereinheit weiterzuleiten. Die Remote-E/A-Einrichtungen könnten optional auch Rechenfähigkeiten aufweisen, um z.B. auf empfangene Rückmeldesignale mit geeigneten Befehlen zum Schutz der Leistungszelle zu reagieren oder die Leistungszelle abzuschalten, z.B. in einen stabilen Kurzschluss zu schalten.

Das Kommunikationssteuerungs- und -verwaltungsmodul sorgt für die richtige Verteilung der einzelnen Informationen aus dem Senderahmen an die Leistungszellen sowie für die korrekte Übertragung der Rückmeldeinformationen von den angeschlossenen Leistungszellen an richtiger Stelle in dem Empfangsrahmen. Das Kommunikationssteuerungs- und -verwaltungsmodul kann ferner dazu eingerichtet sein, aus dem empfangenen Senderahmen Broadcast-Informationen zu extrahieren, die an alle angeschlossenen Leistungszellen gerichtet sind, und diese extrahierten Broadcast-Informationen an alle für jeweilige Leistungszellen bestimmten, extrahierten Informationen anzuhängen und als neue Senderahmen an die Leistungszellen zu senden. Auch die Broadcast-Informationen können verzögerungsarm, schnell an alle Leistungszellen übertragen werden.

Außerdem kann das Kommunikationssteuerungs- und -verwaltungsmodul ferner dazu eingerichtet sein, alle von den angeschlossenen Leistungszellen empfangenen Rückmeldeinformationen gemeinsam mit Informationen, die dazu bestimmt sind, durch das Kommunikationssteuerungs- und -verwaltungsmodul vorausberechnet zu werden, in einen Empfangsrahmen einzufügen und an dem Uplink-Anschluss zur Übertragung an die zentrale Steuereinheit bereitzustellen. Die durch das Kommunikationssteuerungs- und - verwaltungsmodul vorausberechneten Informationen können bspw. vorgegebene Funktionen von empfangenen Sensorwerten und dgl. sein. Insofern weist das Kommunikationssteuerungs- und -verwaltungsmodul vorzugsweise auch Rechenfähigkeiten auf.

Die MDM-Einrichtungen mit einem Uplink- und mehreren Downlink-Anschlüssen ermöglichen es auch, eine Kaskadenstruktur für die Steuervorrichtung aufzubauen. Die Steuervorrichtung kann somit wenigstens zwei kaskadierte Ebenen von MDM-Einrichtungen mit wenigstens einer mit der zentralen Steuereinheit direkt verbundenen MDM-Einrichtung in einer ersten Ebene und mehreren MDM-Einrichtungen in einer zweiten oder weiteren Ebene aufweisen, die zwischen der wenigstens einen MDM-Einrichtung der ersten Ebene und mehreren Leistungszellen geschaltet ist. Wenn z.B. eine MDM-Einrichtung mit einem Uplink-Anschluss und 20 Downlink-Anschlüssen verwendet wird, kann an jeden Downlink-Anschluss der MDM-Einrichtung der ersten Ebene jeweils eine MDM-Einrichtung der zweiten Ebene angeschlossen werden, so dass mit nur zwei Ebenen bis zu 400 Leistungszellen gesteuert werden können. Es können auch mehr als zwei kaskadierte Ebenen vorgesehen sein. Das Ausgangssignal der MDM-Einheit einer höheren Ebene wird dann als Eingang der MDM-Einheit einer nachfolgenden niedrigeren Ebene zur Verfügung gestellt bzw. damit verbunden. Somit kann eine für die jeweilige Anwendung und die jeweiligen Anforderungen geeignete Sternarchitektur bzw. -topologie geschaffen werden.

Die Steuervorrichtung weist vorzugsweise ferner eine zentrale Steuereinheit zur Steuerung der Leistungszellen auf. In einer bevorzugten Ausführungsform kann die zentrale Steuereinheit eine Multikern-CPU und mehrere Kommunikationsschnittstellen aufweisen, wobei der Stromrichter eine Brückenkonfiguration mit mehreren Zweigen aufweist und wobei jedem Zweig ein einzelner CPU-Kern der Multikern-CPU und eine einzelne Kommunikationsschnittstelle zugeordnet ist. Bspw. können sechs Multikern-CPUs für sechs Zweige eines dreiphasigen Stromrichters vorgesehen sein, wobei ein CPU-Kern über eine zugehörige Kommunikationsschnittstelle einen einzelnen Zweig steuert bzw. mit diesem kommuniziert. Durch die Aufteilung und parallele Verarbeitung können die Steuerungs- und Kommunikationsaufgaben besser strukturiert, vereinfacht und beschleunigt werden.

Die Multikern-CPU kann ferner wenigstens einen zusätzlich CPU-Kern über die den Zweigen zugeordneten CPU-Kerne hinaus enthalten. Bspw. kann ein zusätzlicher CPU-Kern für zentrale Steuerungsaufgaben und ein weiterer CPU-Kern für Systemaufgaben vorgesehen sein. Es kann ein sehr leistungsstarkes Steuerungssystem geschaffen werden.

Die Erfindung bietet ferner vielfältige Möglichkeiten, um die Einsatzfähigkeit oder Betriebsbereitschaft zu verbessern. Z.B. kann jeder Zweig eine Anzahl n von für einen Betrieb des Zweiges erforderlichen Leistungszellen und zusätzlich eine Anzahl x von redundanten Leistungszellen aufweisen. Die zentrale Steuereinheit ist dann vorzugsweise dazu eingerichtet, bei Ausfall einer Leistungszelle, die entsprechenden Schaltbefehle an die redundante Leistungszelle zu adressieren, die die Funktion der defekten Leistungszelle übernimmt.

In einer besonders bevorzugten Ausführungsform ist ferner eine redundante Steuereinheit bzw. ein redundanter Controller vorgesehen, die bzw. der ein Duplikat eines jeweiligen CPU-Kerns darstellt und mit allen Leistungszellen eines Zweiges des Stromrichters über einen weiteren Kommunikationsanschluss der Remote-E/A-Einrichtungen verbunden ist, um bedarfsweise, im Falle eines Fehlers in der zentralen Steuereinheit oder eines Fehlers in einer MDM-Einrichtung oder in einer Übertagungsstrecke die Steuerung des Zweiges zu übernehmen. Die redundanten Leistungszellen und die redundante(n) Steuereinheit(en) ermöglichen es, in vielfältigen Fehlerfällen den Betrieb des Stromrichters fortzuführen, ohne diesen anhalten oder abschalten zu müssen.

Die Remote-E/A-Einrichtungen und die MDM-Einrichtungen sind jeweils in Hardware oder vorzugsweise auch als FPGAs implementiert, während die Verbindungsleitungen als Kupfer- oder Glasfaserleitungen realisiert sein können. Die Sende- und Empfangseinrichtungen oder Ein-/Ausgabeschnittstellen, wie die Uplink- und Downlink-Anschlüsse und die Kommunikationsschnittstellen der Remote-E/A-Einrichtungen sind vorzugsweise jeweils als Gigabit-Ethernet-Schnittstellen ausgebildet. Sie können z.B. gemäß IEEE 802.3z für Gigabit Ethernet über Glasfaser oder gemäß IEEE 802.3ab für Gigabit Ethernet über UTP-Kabel eingerichtet sein. Selbstverständlich sind auch andere Techniken und Protokolle, insbesondere zur digitalen seriellen Datenübertragung, z.B. über den RS-485-Standard o.Ä., möglich.

Die Steuervorrichtung kann weitere Einheiten bzw. Einrichtungen, wie z.B. zur Synchronisierung der zentralen Steuereinheit mit der redundanten Steuereinheit, oder dgl. enthalten.

Gemäß einem weiteren Aspekt der Erfindung ist ein Verfahren zur Steuerung eines Stromrichters geschaffen, der eine Anzahl von Leistungszellen aufweist, die jeweils wenigstens ein Leistungshalbleiterschaltelement und eine Remote-Ein-/Ausgabe (E/A)-Einrichtung zur Kommunikation mit einer zentralen Steuereinheit aufweisen, um von der zentralen Steuereinheit Informationen, einschließlich Befehle zum Schalten des wenigstens einen Leistungshalbleiterschaltelementes zu empfangen und Rückmeldeinformationen von der Leistungszelle an die zentrale Steuereinheit zu senden. Das Verfahren weist ein Bereitstellen wenigstens einer Multiplexer/Demultiplexer(MDM)-Einrichtung auf, die wenigstens einen Uplink-Anschluss, der mit der zentralen Steuereinheit in Kommunikationsverbindung steht, mehrere Downlink-Anschlüsse, die jeweils mit einer Remote-E/A-Einrichtung einer zugeordneten Leistungszelle direkt verbunden sind, und ein Kommunikationssteuerungs- und -verwaltungsmodul aufweist. Das Verfahren weist ferner ein Empfangen eines Senderahmens von der zentralen Steuereinheit an der MDM-Einrichtung über den Uplink-Anschluss auf. Das Verfahren weist ferner ein Extrahieren von Informationen, die jeweilige Leistungszellen betreffen, aus dem empfangenen Senderahmen mit dem Kommunikationssteuerungs- und -verwaltungsmodul und Bereitstellen der jeweiligen Informationen an den den betreffenden Leistungszellen zugeordneten Downlink-Anschlüssen der wenigstens einen MDM-Einrichtung auf, um sie zu den Remote-E/A-Einrichtungen der betreffenden Leistungszellen zu senden. Das Verfahren weist ferner ein Empfangen von Rückmeldeinformationen von den angeschlossenen Leistungszellen über deren zugehörige Remote-E/A-Einrichtungen an den Downlink-Anschlüssen der wenigstens einen MDM-Einrichtung auf. Das Verfahren weist außerdem ein Einfügen der empfangenen Rückmeldeinformationen in einen Empfangsrahmen mit dem Kommunikationssteuerungs- und -verwaltungsmodul und Bereitstellen des Empfangsrahmens an dem Uplink-Anschluss der MDM-Einrichtung, um ihn zu der zentralen Steuereinheit zu senden, auf. Das erfindungsgemäße Steuerverfahren bietet, die gleichen Vorteile der guten Ein- und Ausgabefähigkeiten und hohen Steuerungsleistung wie die Steuervorrichtung und schafft auch die Basis für eine hohe Einsatzfähigkeit und Betriebsbereitschaft. Mögliche Weiterbildungen des Steuerverfahrens entsprechen u.a. denen der Steuervorrichtung.

Weitere vorteilhafte Einzelheiten von Ausführungsformen der Erfindung ergeben sich aus Unteransprüchen, der Zeichnung sowie der zugehörigen Beschreibung. Die Erfindung ist nachstehend anhand einer Zeichnung näher beschrieben, die beispielhafte, keinesfalls beschränkende Ausführungsformen der Erfindung zeigt, wobei gleiche Bezugszeichen in allen Figuren verwendet werden, um gleiche Elemente zu bezeichnen. Es zeigen:
Fig. 1 eine beispielhafte herkömmliche Steuervorrichtung für Stromrichter in einer Linientopologie, in stark vereinfachter Prinzipdarstellung;
Fig. 2 einen beispielhaften Stromrichter für Hochleistungs- bzw. Hochspannungsanwendungen in einer vereinfachten Darstellung;
Fig. 3 eine Leistungselektronikschaltung für eine Leistungszelle, die in dem Stromrichter nach Fig. 2 verwendet werden kann, in einer vereinfachten Darstellung;
Fig. 4 eine Ausführungsform einer Steuervorrichtung gemäß der Erfindung bspw. zur Steuerung des Stromrichters nach Fig. 2, in einem vereinfachten Blockschaltbild;
Fig. 5 eine beispielhafte Leistungszelle mit einer Remote-E/A-Schnittstelleneinrichtung zur Verwendung in der Steuervorrichtung nach Fig. 4 in einem stark vereinfachten Blockschaltbild;
Fig. 6 eine Multiplexer/Demultiplexer-Einrichtung zur Verwendung in der Steuervorrichtung nach Fig. 4, in schematisierter Darstellung; und
Fig. 7 ein Flussdiagramm eines Steuerverfahrens zur Steuerung bspw. des Stromrichters nach Fig. 1, in stark vereinfachter Darstellung.

Es wird nun auf Ausführungsformen der Erfindung Bezug genommen, die in den Zeichnungen veranschaulicht sind. Es sollte verständlich sein, dass die in den Zeichnungen veranschaulichten Ausführungsformen lediglich beispielhaft sind und die Erfindung als solche nicht beschränken. Vielmehr sind die Ausführungsformen lediglich dazu gedacht, mögliche Ausführungsformen zu erläutern und den Fachmann zu befähigen, die Erfindung auszuführen. Es sollte ferner verständlich sein, dass in dem Bemühen, eine konzise Beschreibung möglicher Ausführungsformen zu liefern, gegebenenfalls nicht alle von dem Umfang der Erfindung umfassten Einzelheiten angegeben sein können.

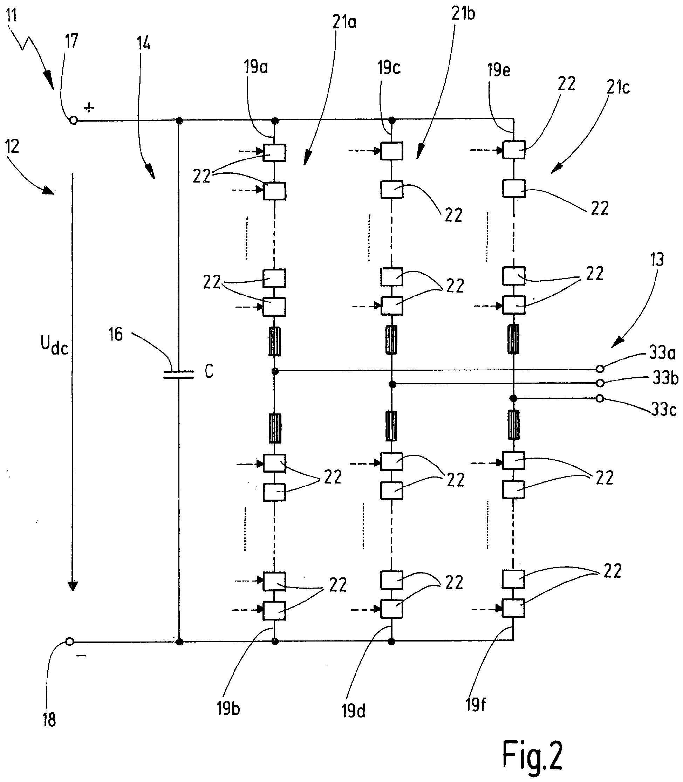

Die vorliegende Erfindung betrifft eine Steuervorrichtung und ein Steuerverfahren zur Steuerung großer leistungselektronischer Geräte bzw. Anlagen, die eine Anzahl von Leistungszellen aufweisen, die Befehle von einer zentralen Steuereinheit empfangen und Rückmeldungen zu der zentralen Steuereinheit senden. Bspw. sind die Steuervorrichtung und das Steuerverfahren gemäß der vorliegenden Erfindung zur Steuerung sehr großer Stromrichter geeignet, wie sie für Hochspannungs- bzw. Hochleistungsanwendungen verwendet werden. Eine beispielhafte Ausführungsform für einen derartigen Stromrichter 11 ist in Fig. 2 veranschaulicht. Der dargestellte Stromrichter 11 kann bspw. für ein Hochspannungsgleichstrom-Verteilungssystem zur elektrischen Energieübertragung bei hoher Gleichspannung oder für viele andere Anwendungen verwendet werden. Insbesondere ist der Stromrichter 11 dazu eingerichtet, eine auf seiner Gleichspannungsseite 12 anliegende Gleichspannung in eine Wechselspannung auf seiner Wechselspannungsseite 13 umzuwandeln oder umgekehrt. Die Gleichspannungsseite 12 kann über eine hier nicht näher dargestellte Gleichstromübertragungseinrichtung mit einem anderen Energieversorgungsnetz oder elektrischem Umrichter ähnlich dem Stromrichter 11 oder mit einer Gleichspannungsquelle, wie bspw. einer Solarzelle oder dgl., verbunden sein. Die Wechselspannungsseite 13 kann an ein elektrisches Energieversorgungsnetz, eine elektrische Wechselstrom(AC)-Maschine, einen AC-Generator, eine Windkraftanlage oder dgl. angeschlossen sein. Der Stromrichter 11 weist auf der Gleichspannungsseite 12 einen Gleichspannungszwischenkreis 14 auf, der hier durch einen Kondensator 16 gebildet ist, der zwischen Gleichspannungsanschlüssen 17, 18 des Stromrichters 11 angeschlossen ist, um Gleichspannungsenergie zu speichern.

Wie ferner aus Fig. 2 ersichtlich, weist der Stromrichter hier sechs Stromrichterzweige 19a-19f auf, von denen jeweils zwei, ein oberer und ein unterer 19a, 19b bzw. 19c, 19d bzw. 19e, 19f, einen jeweiligen Phasenzweig 21a, 21b bzw. 21c bilden. Jeder Phasenzweig 21a-c erstreckt sich zwischen dem ersten, bspw. positiven Gleichspannungsanschluss ("+") 17 und dem zweiten, bspw. negativen Gleichspannungsanschluss ("-") 18.

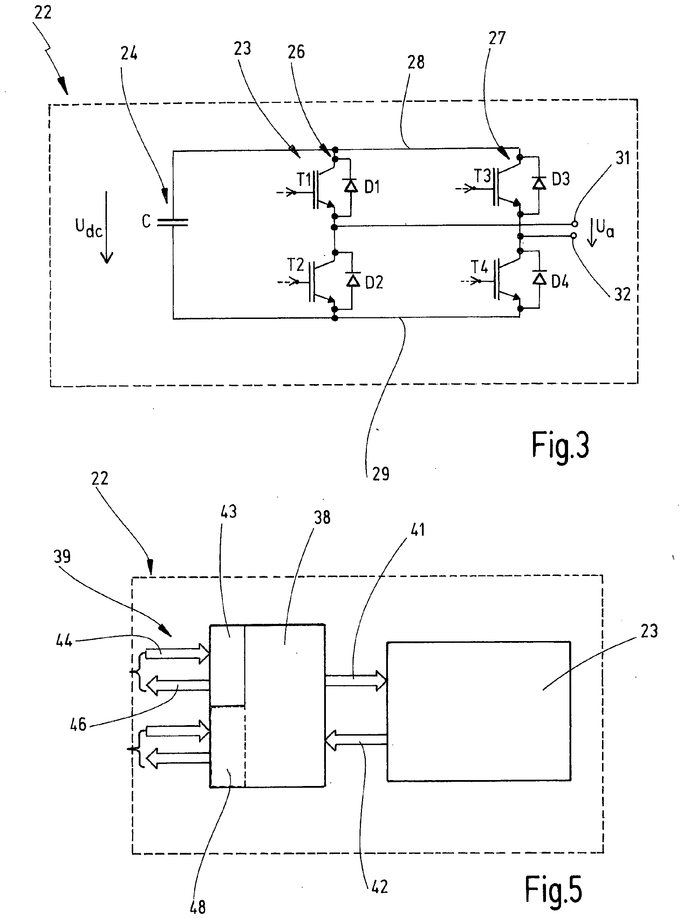

Jeder Stromrichterzweig 19a-f weist eine Reihenschaltung aus einer Vielzahl in Reihe geschalteter Stromrichter-Leistungszellen oder -Submodulen 22 auf. Die steuerbare Gleichspannung an den Gleichspannungsanschlüssen 17, 18 des Stromrichters 11 kann über die Schaltzustände der Leistungszellen 22 dynamisch verändert werden. Die Anzahl der Leistungszellen 22 bestimmt dabei die verfügbare Anzahl von Stromrichter-Schaltzuständen, die eine feine Spannungsstufung und eine Spannungsform hoher Güte sowie hohe Spannungsniveaus bis auf Hochspannungs-Gleichspannungs-Übertragungs(HGÜ)-Niveaus ermöglichen. Bei dem Stromrichter 11 kann es sich um einen modularen Multi-Level- oder Mehrpunktstromrichter handeln. Die Leistungszellen 22 sind nachstehend im Zusammenhang mit den Figuren 3 und 5 näher erläutert.

Fig. 3 zeigt in Form eines vereinfachten Schaltplans eine Ausführungsform einer Leistungselektronikschaltung für eine Leistungszelle 22 gemäß einer an sich bekannten Topologie, wie sie in dem Stromrichter 11 der in Fig. 1 gezeigten Art verwendet werden kann. Die Leistungszelle 22 weist eine Brückenschaltung 23 und einen zu der Brückenschaltung 23 parallel geschalteten Kondensator C, 24 auf. Die Brückenschaltung 23 ist hier als sogenannte symmetrische H- oder Vollbrücke mit zwei parallelen Leistungshalbleiterzweigen 26, 27 ausgebildet, die zwischen einem ersten und einem zweiten Gleichspannungsknoten 28, 29 parallel zueinander angeschlossen sind. Der erste Leistungshalbleiterzweig 26 weist eine Reihenschaltung aus einem ersten Leistungshalbleiterschalter T1 und einem zweiten Leistungshalbleiterschalter T2 auf, wobei dem ersten und dem zweiten Leistungshalbleiterschalter T1, T2 jeweils eine antiparallele bzw. gegensinnig parallel geschaltete Freilaufdiode D1 bzw. D2 zugeordnet ist. Die Freilaufdioden D1, D2 dienen dazu, bei ausgeschaltetem Leistungshalbleiterschalter T1 bzw. T2 Betriebsstrom zu führen und den zugehörigen Leistungsschalter gegen unzulässige Über- bzw. Sperrspannungen zu schützen.

In ähnlicher Weise weist der zweite Leistungshalbleiterzweig 27 eine Reihenschaltung aus einem dritten und einem vierten Leistungshalbleiterschalter T3, T4 auf, denen jeweils eine Freilaufdiode D3 bzw. D4 antiparallel geschaltet ist. Die Freilaufdioden D3, D4 erfüllen die gleiche Funktion wie die Freilaufdioden D1, D2.

Die Leistungshalbleiterschalter T1-T4 sind steuerbare Schalter, die hier vorteilhafterweise durch IGBTs (Bipolartransistoren mit isolierter Gate-Elektrode) gebildet sind. Prinzipiell könnten aber auch andere Transistoren, wie bspw. Feldeffekttransistoren, insbesondere MOSFETs, Gate-Turn-Off (GTO)-Thyristoren, IGC-Thyristoren (Integrated Gate-Commutated Thyristors, IGCTs) und andere vergleichbare schaltbare elektronische Bauelemente eingesetzt werden.

Der Verbindungspunkt zwischen dem ersten und dem zweiten Leistungshalbleiterschalter T1 und T2 des ersten Leistungshalbleiterzweiges 26 bildet einen ersten Wechselspannungsanschluss 31 der Leistungszelle 22, während der Verbindungspunkt zwischen dem dritten und dem vierten Leistungshalbleiterschalter T3, T4 in dem zweiten Leistungshalbleiterzweig 27 einen zweiten Wechselspannungsanschluss 28 der Leistungszelle 22 bildet.

Zu den beiden parallel geschalteten Leistungshalbleiterzweigen 26, 27 ist der als Energiespeicher dienende Kondensator C, 24 parallel geschaltet, der auch als Gleichspannungszwischenkreiskondensator des Submoduls bezeichnet werden kann. Die Gleichspannung u_{dc} an dem Kondensator C ist aufgrund der Schaltung der Freilaufdioden D1-D4 stets positiv und kann je nach Bemessung und Anwendung bspw. zwischen einigen Hundert Volt und einigen kV betragen. Die Klemmenspannung uₐ zwischen den AC-Anschlüssen 31, 32 der Leistungszelle 22 kann im Wesentlichen die Werte -u_{dc}, +u_{dc} oder 0 annehmen. Die Gleichspannung u_{dc} an dem Kondensator C kann größer oder kleiner werden. Ein Strom kann durch die Leistungszelle 22 prinzipiell in beide Richtungen, von dem Anschluss 31 zu dem Anschluss 32 oder umgekehrt fließen.

Die einzelnen Leistungszellen 22 sind in Reihe zueinander verbunden, um die Stromrichterzweige 19a-f des Stromrichters 11 nach Fig. 2 zu bilden. Es kann eine Vielzahl derartiger Leistungszellen 22, bis zu 300 Leistungszellen oder mehr, zusammengeschaltet sein, um die einzelnen Stromrichterzweige 19a-f zu bilden. An dem Verbindungspunkt zwischen den zugehörigen Stromrichterzweigen 19a, 19b bzw. 19c, 19d bzw. 19e, 19f sind die jeweiligen Wechselspannungsanschlüsse 33a, 33b, 33c des Stromrichters 11 herausgeführt, die mit einer Wechselspannungsquelle oder -senke verbunden werden.

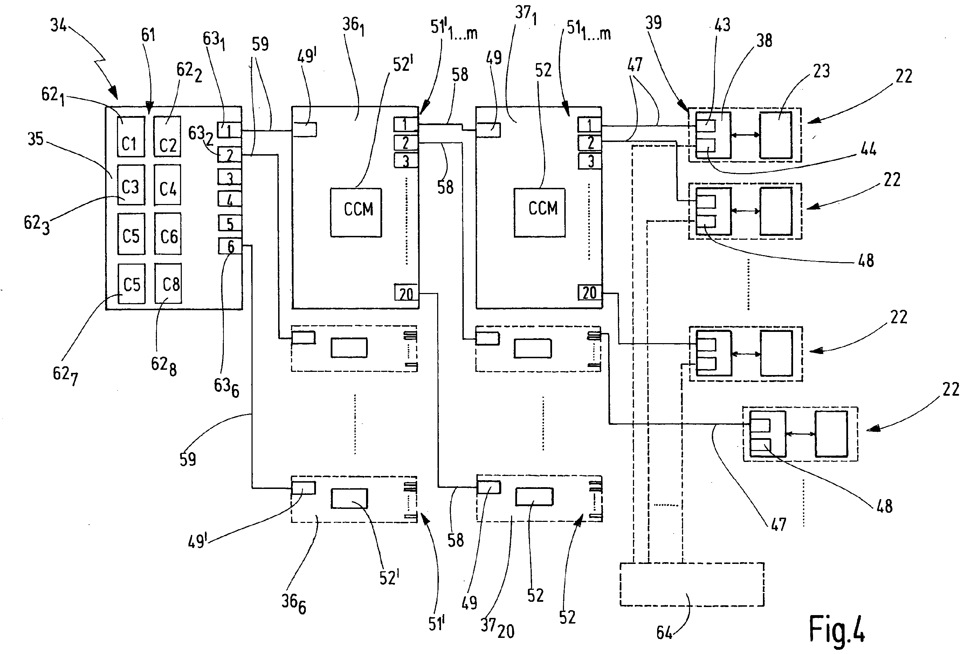

Durch geeignete Ansteuerung der Leistungshalbleiterschalter T1-T4 der einzelnen Leistungszellen 22 des Stromrichters 11 kann die Gleichspannung auf der Gleichspannungsseite 12 in eine Wechselspannung einer gewünschten Amplitude und Frequenz auf der Wechselspannungsseite 13 des Stromrichters 11 oder umgekehrt umgewandelt werden. Hierzu erhalten die Leistungshalbleiterschalter T1, T4 entsprechende Schaltbefehle von einer Steuervorrichtung, wie in den Figuren 2 und 3 mit gestrichelt angedeuteten Steuerleitungen angezeigt. Die Steuervorrichtung ist nachstehend im Zusammenhang mit Fig. 4 näher erläutert.

Es sollte beachtet werden, dass die in Fig. 3 dargestellte H-Brückenschaltung 23 nur eine bevorzugte Ausführungsform einer Leistungselektronikschaltung für die Leistungszelle 22 darstellt. Es könnten auch andere Schaltungen, wie bspw. eine Halbbrücke oder dgl. verwendet werden. Eine Leistungszelle 22 könnte prinzipiell auch nur einen einzelnen Leistungshalbleiterschalter, z.B. einen Thyristor oder dgl., aufweisen.

Fig. 4 zeigt eine beispielhafte Ausführungsform einer Steuervorrichtung 34 gemäß einer Ausführungsform der vorliegenden Erfindung. Die Steuervorrichtung 34 ist dazu eingerichtet, große leistungselektronische Geräte bzw. Anlagen, die eine Vielzahl von Leistungszellen aufweisen, wie bspw. den großen Stromrichter 11 mit der Vielzahl von Leistungszellen 22, wie in den Figuren 2 und 3 veranschaulicht, zu steuern. In dem dargestellten Ausführungsbeispiel weist die Steuervorrichtung 34 eine zentrale Steuereinheit 35, eine Anzahl Multiplexer/Demultiplexer(MDM)-Einrichtungen 36 einer ersten Ebene sowie eine Anzahl Multiplexer/Demultiplexer(MDM)-Einrichtungen 37 einer zweiten Ebene auf, die zur Steuerung und Kommunikation mit einer Vielzahl von Leistungszellen 22 verbunden sind.

Wie auch aus Fig. 5 in größeren Einzelheiten ersichtlich, enthält jede Leistungszelle 22 zur Kommunikation mit der Steuervorrichtung 34 eine Remote-Ein-/Ausgabe(E/A)-Einrichtung (kurz REA-Einrichtung) 38, die allein der jeweiligen einzelnen Leistungszelle 22 zugeordnet ist. Die REA-Einrichtung 38 weist eine Kommunikationsschnittstelle 39 auf und ist dazu eingerichtet, von der zentralen Steuereinheit 35 Informationen, insbesondere Schaltbefehle für die Aktuatoren bzw. Leistungshalbleiterschalter der Leistungszelle 22 über die Kommunikationsschnittstelle 39 zu empfangen und als Befehle 41 zur Ansteuerung der Leistungshalbleiterschalter T1-T4 der Brückenschaltung 23 der Leistungszelle 22 weiterzuleiten. Die REA-Einrichtung 38 ist ferner dazu eingerichtet, Rückmeldungen 22 von der Leistungszelle 22, bspw. Messwerte von in der Leistungszelle 22 vorgesehenen (hier nicht veranschaulichten) Sensoren zur Messung von Spannungen, Strömen, der Temperatur und dgl., über die Kommunikationsschnittstelle 39 an die zentrale Steuereinheit 35 zu übermitteln.

Die Kommunikationsschnittstelle 39 ist vorzugsweise für eine bidirektionale Kommunikation eingerichtet, um über einen einzigen Anschluss 43 sowohl Informationen 44 von der zentralen Steuereinheit 35 zu empfangen als auch Rückmeldeinformationen 46 zu der zentralen Steuereinheit 35 über eine einzige Kommunikationsleitung 47 zu senden. Natürlich könnte die Kommunikationsschnittstelle 39 auch gesonderte Anschlüsse für den Empfang und das Senden von Daten vorsehen.

Wie ferner aus Fig. 5 ersichtlich, kann die REA-Einrichtung 38 optional eine weitere Kommunikationsschnittstelle 48 aufweisen, die hier zur Kommunikation mit weiteren Modulen der Steuervorrichtung 34, wie bspw. einer redundanten Steuereinrichtung vorgesehen sein kann. Diese weitere Kommunikationsschnittstelle 48 ist bei der in Fig. 1 gezeigten herkömmlichen Linientopologie zur Verbindung mit nachfolgenden Leistungszellen dringend erforderlich. Bedingt durch die kaskadierte Topologie bzw. Sternarchitektur der erfindungsgemäßen Steuervorrichtung 34 ist die weitere Kommunikationsschnittstelle 48 zur Verbindung mit nachfolgenden Leistungszellen nicht erforderlich und kann auch weggelassen werden.

Die REA-Einrichtung 38 kann begrenzte Rechenfähigkeiten haben, um bspw. auf die Rückmeldungen 42 der Leistungszelle 22 unmittelbar reagieren zu können und die Leistungshalbleiterschalter T1-T4 der Leistungszelle 22 in einem Fehlerfall in einen stabilen Zustand, z.B. einen stabilen Kurzschluss oder dgl., zu schalten, um die Leistungszelle abzuschalten, einen weiteren Betrieb des Stromrichters 11 aber zu ermöglichen. Derartige zusätzliche Rechenfähigkeiten sind aber nicht erforderlich. Im Fehlerfalle kann die zentrale Steuereinheit 35 entsprechende Befehle übermitteln, um die betreffende Leistungszelle 22 bedarfsweise abzuschalten oder zu schützen.

Im Übrigen kann die REA-Einrichtung 38 vorteilhafterweise unter Verwendung von im Feld programmierbaren Gatter-Anordnungen (FPGAs) realisiert werden. Die Kommunikationsschnittstelle 39 ist vorzugsweise als Gigabit-Ethernet-Schnittstelle eingerichtet, die eine Hochgeschwindigkeitskommunikation über die Kommunikationsleitung 47 entsprechend einem jeweiligen Gigabit-Ethernet-Standard, wie bspw. IEEE 802.3z für die Kommunikation über Glasfaserleitungen oder IEEE 802.3ab zur Kommunikation über Twisted-Pair-Kabel, z.B. Kupferkabel, ermöglicht. Andere Technologien sind auch möglich.

Erneut bezugnehmend auf Fig. 4, ist veranschaulicht, dass jede Leistungszelle 22 über ihre zugehörige REA-Einrichtung 38 und die Kommunikationsleitung 47 mit einer Multiplexer/Demultiplexer(MDM)-Einrichtung 37 der Anzahl MDM-Einrichtungen 37_{1...l} der zweiten Ebene verbunden ist. Wie aus Fig. 4 ersichtlich, können mehrere (l) derartige MDM-Einrichtungen 37_{1...l} vorgesehen sein, um eine Vielzahl von Leistungszellen 22 anschließen zu können.

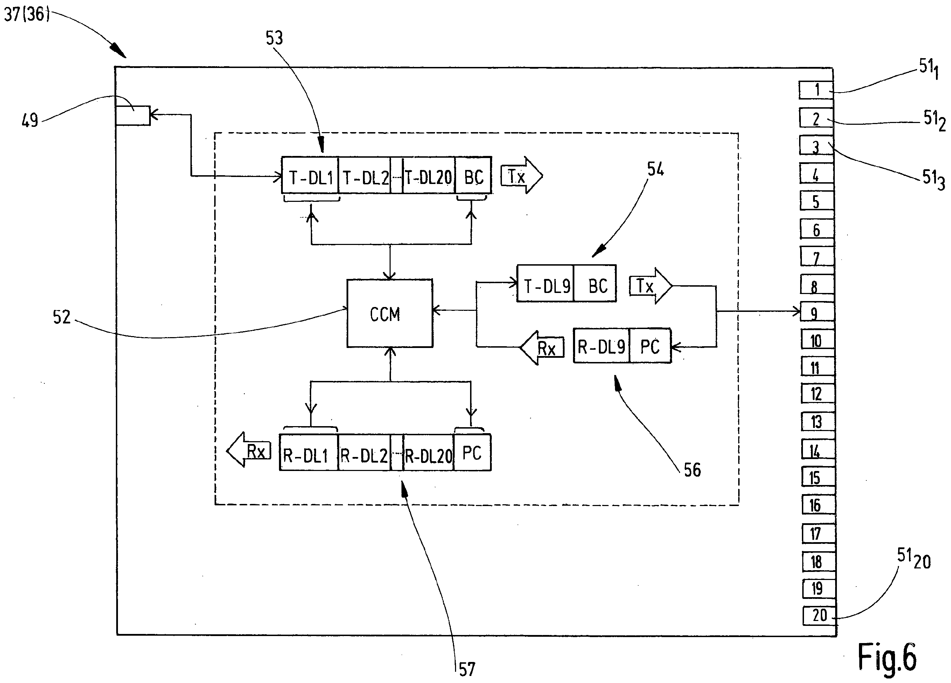

Der Aufbau der MDM-Einrichtung 37 ist in Fig. 6 näher veranschaulicht. Die MDM-Einrichtung 37 weist wenigstens einen Uplink-Anschluss 49 zur Verbindung mit der zentralen Steuereinheit 35, mehrere Downlink-Anschlüsse 51_{1...m}, die jeweils mit einer Kommunikationsschnittstelle 39 einer zugeordneten REA-Einrichtung 38 direkt verbunden sind, und ein Kommunikationssteuerungs- und -verwaltungsmodul 52 auf.

Bei der erfindungsgemäßen MDM-Einrichtung 37 genügt ein einziger Uplink-Anschluss 49 zur Verbindung mit der zentralen Steuereinheit 35. Die MDM-Einrichtung 37 kann aber auch zwei oder mehrere Uplink-Anschlüsse aufweisen, falls dies gewünscht ist oder die jeweilige Anwendung dies erfordert. Für die erfindungsgemäße Steuervorrichtung 34 sind diese aber nicht erforderlich.

In dem dargestellten Beispiel weist die MDM-Einrichtung 37 20 Downlink-Anschlüsse 51, die jeweils mit einer einzelnen REA-Einrichtung 38 direkt verbunden sind. Selbstverständlich ist die Anzahl m = 20 von Downlink-Anschlüssen nur beispielhaft, und die MDM-Einrichtung 38 kann mehr oder weniger als 20 Downlink-Anschlüsse 51 enthalten.

Das Kommunikations- und -verwaltungsmodul 52, das nachfolgend kurz als ein CCM(Communication Control Manager)-Modul bezeichnet werden soll, ist die zentrale Funktionseinheit der MDM-Einrichtung 37. Wie in Fig. 6 veranschaulicht, extrahiert das CCM-Modul 52 aus einem Senderahmen 53, der über den Uplink-Anschluss 49 der MDM-Einrichtung 38 von der zentralen Steuereinheit empfangen wird, die für jeden belegten Downlink-Anschluss 51_{1...m}, also jede daran angeschlossene Leistungszelle 22, bestimmten Informationen T-DL1 ... T-DLm. Ferner extrahiert das CCM-Modul 52 aus dem Senderahmen (Tx) 53 Broadcast-Informationen BC, die an alle angeschlossenen Leistungszellen 22 gerichtet sind, und fügt die extrahierten Broadcast-Informationen BC an die für jede angeschlossene Leistungszelle bestimmten Informationen T-DL1 ... T-DLm an, um einen für eine jeweilige Leistungszelle 22 bestimmten neuen Senderahmen 54 zu bilden. Dies ist in Fig. 6 für den neunten Downlink-Anschluss 51₉ anhand des neuen Senderahmens 54, der die für den Downlink-Anschluss 51₉ bestimmten Informationen T-DL9 und die Broadcast-Informationen (BC) enthält, beispielhaft veranschaulicht.

Das CCM-Modul 52 empfängt ferner alle Empfangsrahmen, die die Rückmeldeinformationen R-DL1 bis R-DLm von allen angeschlossenen Leistungszellen 22, wie bspw. Sensorinformationen, enthalten, gemeinsam mit Informationen PC, die durch das CCM-Modul vorausberechnet werden sollen. Letztere können bspw. eine Summe der aktuellen Sensorwerte, ein Mittelwert derselben oder eine beliebige sonstige gewünschte Funktion der Sensorwerte von einer oder mehreren der angeschlossenen Leistungszellen 22 sein. Das CCM-Modul 52 packt anschließend alle empfangenen Empfangsrahmen 56 R-DL1 ... R-DLm in korrekter Form zu einem neuen Empfangsrahmen 57 zusammen und fügt die vorausberechnete Information PC hinzu, um den vollständigen neuen Empfangsrahmen (Rx) 57 zu bilden, der über den Uplink-Anschluss 49 in Richtung der zentralen Steuereinheit 35 gesendet wird.

Erneut Bezug nehmen auf Fig. 4 sind die MDM-Einrichtungen 36, 37 in mehreren Ebenen kaskadiert. Wenngleich hier zwei Ebenen veranschaulicht sind, ist die Anzahl von Ebenen durch das beschriebene Beispiel nicht beschränkt. Es können mehr als zwei Ebenen vorgesehen sein. In einer reduzierten Architektur kann auch nur eine einzige Ebene vorgesehen sein, die eine einzige oder mehrere MDM-Einrichtungen 37 zwischen der zentralen Steuereinheit 35 und den Leistungszellen 22 enthält. Für die bevorzugte Anwendung im Zusammenhang mit großen Stromrichtern, wie dem Stromrichter 11 nach Fig. 2, oder vergleichbaren großen leistungselektronischen Geräten mit großer Anzahl von Leistungszellen wird eine Architektur mit wenigstens zwei Ebenen bevorzugt.

In der veranschaulichten bevorzugten Konfiguration sind zwei Ebenen mit einer oder mehreren MDM-Einrichtungen 36_{1...k} der ersten Ebene vorgesehen, die mit den MDM-Einrichtungen 37₁₋ₗ der zweiten Ebene kaskadiert sind. Insbesondere sind hier entsprechend der Anzahl der sechs Stromrichterzweige 19a-f k = 6 MDM-Einrichtungen 36₁ bis 36₆ der ersten Ebene vorgesehen, von denen jede mit mehreren, im vorliegenden Fall 20 MDM-Einrichtungen 37₁ bis 37₂₀ der zweiten Ebene verbunden ist. Die MDM-Einrichtungen 36 der ersten Ebene sind hier bevorzugterweise mit den MDM-Einrichtungen 37 der zweiten Ebene identisch ausgebildet. Sie weisen jeweils einen Uplink-Anschluss 49' und mehrere, hier 20 Downlink-Anschlüsse 51' auf, wobei jeder Downlink-Anschluss 51' mit dem Uplink-Anschluss 49 einer einzelnen nachfolgenden MDM-Einrichtung 37 kommunikationsmäßig verbunden sind. Als Verbindungsleitungen 58 könnten wiederum Kupferleitungen, insbesondere Twisted-Pair-Kabel, oder bevorzugterweise Glasfaserleitungen verwendet werden.

Jede MDM-Einrichtung 36 der ersten Stufe weist auch ein Kommunikationssteuerungs- und -verwaltungsmodul (CCM-Modul) 52' auf, das dazu dient, aus dem über den Uplink 49' von der zentralen Steuereinheit 35 empfangenen Senderahmen Tₓ die für jeden belegten Downlink-Anschluss 51'_{1...m} bestimmten Informationen T-DL1 bis T-DL20 zu extrahieren und diese gemeinsam mit Broadcast-Informationen BC in einem neuen Senderahmen zu jedem Downlink-Anschluss 51'_{1...m} zu senden sowie alle Empfangsrahmen Rx mit Rückmeldeinformationen von den Leistungszellen 22, die über die angeschlossenen zweiten MDM-Einrichtungen 37 übertragen werden, zu empfangen und diese gemeinsam mit gegebenenfalls zusätzlich vorausberechneten Informationen PC an dem Uplink-Anschluss 49' bereitzustellen, um sie über eine Kommunikationsleitung 59 zu der zentralen Steuereinheit 35 zu übertragen.

Die zentrale Steuereinheit (CPU) 35 ist in dem veranschaulichten Beispiel und gemäß einer bevorzugten Ausführungsform mit einer Multikern-CPU 61, die im vorliegenden Beispiel acht CPU-Kerne 62₁ bis 62₈ aufweist, und mit mehreren, im vorliegenden Fall sechs Kommunikationsschnittstellen 63₁ bis 63₆ ausgebildet. Jeweils ein CPU-Kern 62₁ bis 62₆ und jeweils eine einzelne Kommunikationsschnittstelle 63₁ bis 63₆ sind einem einzelnen Stromrichterzweig 19a-f zugeordnet, um diesen zu steuern. Insofern ist ein erster CPU-Kern 62₁ über eine erste Kommunikationsschnittstelle 63₁ mit einer ersten MDM-Einrichtung 36₁ der ersten Ebene kommunikationsmäßig verbunden, an der alle zweiten MDM-Einrichtungen 37 angeschlossen sind, die mit Leistungszellen 22 des ersten Stromrichterzweiges 19a verbunden sind. In ähnlicher Weise ist ein zweiter CPU-Kern 61₂ über eine zweite Kommunikationsschnittstelle 63₂ mit einer zweiten MDM-Einrichtung 36₂ der MDM-Einrichtungen der ersten Ebene verbunden, an die alle MDM-Einrichtungen 37 der zweiten Ebene angeschlossen sind, die mit allen Leistungszellen 22 verbunden sind, die zu dem zweiten Stromrichterzweig 19b gehören. In ähnlicher Weise sind auch den Stromrichterzweigen 19c-f jeweils ein einzelner CPU-Kern 62₃ bis 62₆, eine zugehörige Kommunikationsschnittstelle 63₃ bis 63₆, eine zugehörige MDM-Einrichtung 36₃ bis 36₆ der ersten Ebene sowie mehrere MDM-Einrichtungen 37_{1...l} der zweiten Ebene zugeordnet. Auf diese Weise kann jeder CPU-Kern 62₁₋₆ den jeweiligen Stromrichterzweig 19a-f einfach und schnell, parallel zu der Steuerung der anderen Stromrichterzweige steuern und Informationen mit diesem schnell, mit geringen Verzögerungszeiten austauschen.

In dem veranschaulichten Beispiel mit zwei Ebenen können so 20 MDM-Einrichtungen 37 der zweiten Ebene an den Downlink-Anschlüssen 51'₁ bis 51'₂₀ jeder MDM-Einrichtungen 37 der ersten Ebene angeschlossen werden, was es ermöglicht, insgesamt bis zu 400 REA-Einrichtungen 38 bzw. Leistungszellen 22 für jeden Stromrichterzwei 19a-f an jede Kommunikationsschnittstelle 63₁ bis 63₆ anzuschließen, also hier z.B. insgesamt bis zu 2400 REA-Einrichtungen 38 bzw. Leistungszellen 22 mit der zentralen Steuereinheit 35 zu verbinden.

Die restlichen zwei CPU-Kerne 62₇ und 62₈ sind optional, können aber, wenn sie vorhanden sind, zentrale Steuerungsaufgaben und systembezogene Aufgaben übernehmen, so dass diese Aufgaben von der Steuerung der Leistungszellen 22 in den Stromrichterzweigen 19a-f und der Kommunikation mit diesen entkoppelt werden können. Auch dies verbessert die einfache Implementierbarkeit, Übersichtlichkeit, Steuerbarkeit und Funktionsfähigkeit des gesamten Steuersystems.

Die Insoweit beschriebene Steuervorrichtung 34 arbeitet wie folgt:
Die zentrale Steuereinheit 35 der Steuervorrichtung 34 kann bspw. mit allen Leistungszellen 22 eines angeschlossenen Stromrichters 11 in Echtzeit kommunizieren und diese steuern, indem sie pro Zyklus einen einzelnen Senderahmen sendet, der zu den Leistungszellen 22 übertragen wird, und von den Leistungszellen 22 Rückmeldeinformationen in einem einzelnen Empfangsrahmen pro Zyklus empfängt. Mit der erfindungsgemäßen Typologie können hohe Steuerungsleistungen kombiniert mit kurzen Zykluszeiten erreicht werden. Jeder CPU-Kern 62₁ bis 62₆ steuert die zu einem Stromrichterzweig 19a-f zugehörigen Leistungszellen 22 und kommuniziert mit diesen über die dedizierte Kommunikationsschnittstelle 63₁ bis 63₆, die zugehörige MDM-Einrichtung 36_{1...6} der ersten Ebene und die zugehörigen MDM-Einrichtungen 37_{1...l} der zweiten Ebene. Die MDM-Einrichtungen 36 und 37 extrahieren jeweils die für die in Datenflussrichtung stromabwärts an die Downlink-Anschlüsse 51, 51' angeschlossenen Leistungszellen 22 des jeweiligen Stromrichterzweigs 19a-f. Umgekehrt werden die von den Leistungszellen 22 eines jeden Stromrichterzweigs 19a-f zurückgesandten Rückmeldeinformationen über die in Kaskade geschalteten MDM-Einrichtungen 37_{1...l} und 36₁ bis 36₆ jeweils zusammengeführt und zu der zentralen Steuereinheit 35 zurück übermittelt.

Auf diese Weise können Befehle parallel zu einer hohen Anzahl von Aktuatoren, bei sechs Stromrichterzweigen mit z.B. 300 Leistungszellen pro Zweig z.B. insgesamt 1800 Leistungszellen und 7200 Leistungshalbleiterschaltern der H-Brückenschaltungen 23, gesandt und Rückmeldungen von einer hohen Anzahl von Sensoren empfangen werden. Die Sende-, Steuerungs- und Empfangsoperationen können in sehr anspruchsvollen, kurzen Zykluszeiten bewerkstelligt werden. Die Kommunikationsverzögerungszeit kann aufgrund der kaskadierten Topologie bei zwei Ebenen auf nur zwei Verzögerungszeiten, also z.B. 2 * 0,3 Mikrosekunden = 0,6 Mikrosekunden, begrenzt werden, was bei einer typischen Zykluszeit von z.B. 100 Mikrosekunden vernachlässigbar ist.

Außerdem kann die erfindungsgemäße Steuervorrichtung 34 mit standardgemäßen und allgemein erhältlichen Komponenten, einschließlich weit verbreiteter Multikern-CPUs, Gigabit-Ethernet-Kommunikationsadapter bzw. -schnittstellen und programmierbarer Logikschaltungen, z.B. FPGAs, mit relativ geringem Aufwand und bei geringen Kosten realisiert werden. Der einfache, übersichtliche und zentralisierte Aufbau der erfindungsgemäßen Steuervorrichtung 34 vereinfacht die Entwicklungs-, Implementierungs- und Programmierungsarbeiten und schafft die Basis für einen zuverlässigen und dauerhaften Betrieb.

Im Rahmen der Erfindung sind zahlreiche Modifikationen möglich. Bspw. könnte die zentrale Steuereinheit 35 auch nur einen einzigen CPU-Kern oder weniger CPU-Kerne 62 als Stromrichterzweige 19 enthalten. Die Steuerungs- und Kommunikationsaufgaben können dann auf die vorhandenen CPU-Kerne passend verteilt werden. Es kann auch eine beliebige Anzahl von einer oder mehreren MDM-Einrichtungen 36 der ersten Ebene und eine beliebige Anzahl von MDM-Einrichtungen 37 der zweiten Ebene und gegebenenfalls weiterer Ebenen je nach Anwendung und Anforderung verwendet werden. Die MDM-Einrichtungen 36 und 37 der verschiedenen Ebenen könnten auch unterschiedlich, bspw. mit unterschiedlicher Anzahl von Downlink-Anschlüssen 51 bzw. 51' ausgebildet sein. Die REA-Einrichtung 38 kann durch eine beliebige Kommunikationsschnittstelle ersetzt werden, die einer Leistungszelle 22 ermöglicht, mit anderen Modulen zu kommunizieren. Ferner sind auch unterschiedliche Kommunikationsmodi möglich, bei denen Sende- und Empfangsinformationen auch in einem Rahmen kombiniert sein können oder Informationen auf mehrere Sende- und Empfangsrahmen aufgeteilt sein können. Wenngleich in den Sende- und Empfangsrahmen gemäß dem veranschaulichten Ausführungsbeispiel keine Adressierungsinformationen enthalten sind und die CCM-Module 52, 52' wissen, an welcher Stelle in den jeweiligen Rahmen sie die jeweils relevanten Informationen auffinden können oder einfügen müssen, können bei der Kommunikation auch unterschiedliche Adressierungsmodi berücksichtigt bzw. integriert werden.

Als weitere Modifikation kann die Einsatzfähigkeit und Betriebsbereitschaft des leistungselektronischen Systems verbessert werden, indem redundante Leistungszellen 22 vorgesehen werden. Insbesondere können zusätzlich zu den n Leistungszellen 22, die für den Betrieb eines Stromrichterzweigs 19a-f erforderlich sind, zusätzliche x Leistungszellen 22 vorgesehen werden (nicht veranschaulicht), so dass x Leistungszellen zulässigerweise ausfallen können, bevor das System abgeschaltet werden muss. Mit dem Verlust von bis zu x Leistungszellen kann das System weiterhin ohne Unterbrechung und ohne den Bedarf nach einer Reparatur weiter betrieben werden. Erst wenn mehr als x Leistungszellen in einem Stromrichterzweig 19a-f ausfallen, muss dieser oder muss der gesamte Stromrichter 11 abgeschaltet werden.

Die Einsatzfähigkeit bzw. Betriebsbereitschaft des dargestellten Steuerungssystems kann weiter verbessert werden, indem eine zusätzliche redundante Steuereinheit 64 für jeden Stromrichterzweig 19a-f vorgesehen wird, die ein vollständiges Duplikat des zugehörigen CPU-Kerns 62₁₋₆ sein kann. Die redundante Steuereinheit 64 ist in Fig. 2 gezeigt. Wie daraus ersichtlich, ist die redundante Steuereinheit 64 an alle REA-Einrichtungen 38 über die weitere Kommunikationsschnittstelle 48 angeschlossen, die für diesen Zweck vorgesehen sein kann. Jede redundante Steuereinheit 64 übernimmt im Falle eines Fehlers in der zentralen Steuereinheit 35, z.B. eines Fehlers eines dem jeweiligen Stromrichterzweig 19a-f zugehörigen CPU-Kerns 62₁₋₆, oder eines Fehlers in einer relevanten MDM-Einrichtung 36 bzw. 37 oder in einer Übertagungsstrecke die Kontrolle über die zugehörigen Leistungszellen 22 des Stromrichterzweigs und deren Steuerung. Zur Synchronisation der CPU-Kerne 62₁₋₆ mit den zugehörigen redundanten Steuereinheiten 64, zum Abgleich der Daten zwischen diesen, etc. können geeignete Synchronisations- und Abgleichseinrichtungen vorgesehen sein.

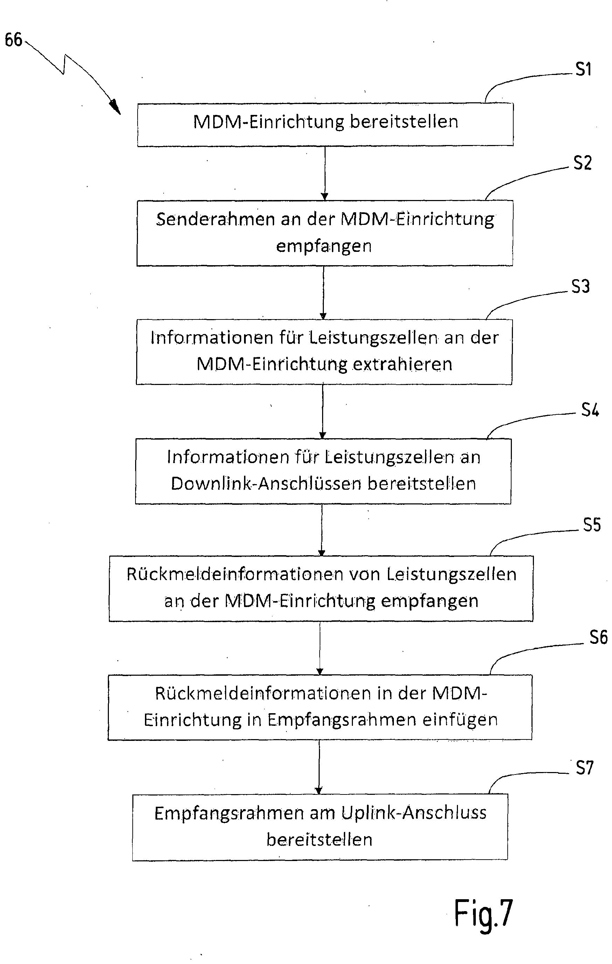

Fig. 7 zeigt ein Flussdiagramm eines Verfahrens zur Steuerung eines Stromrichters oder dgl., der eine Anzahl von Leistungszellen aufweist, die jeweils wenigstens ein Leistungshalbleiterschaltelement aufweisen und Befehle von einer zentralen Steuereinheit empfangen und Informationen zu einer zentralen Steuereinheit senden, gemäß einer Ausführungsform der Erfindung. Sofern nicht bereits vorhanden, wird für jede Leistungszelle, z.B. 22, jeweils eine Remote-Ein-/Ausgabe(E/A)-Einrichtung (REA-Einrichtung), z.B. 38, mit einer Kommunikationsschnittstelle, z.B. 39, bereitgestellt. Das Steuerverfahren enthält dann den Schritt S1 des Bereitstellens wenigstens einer Multiplexer-/Demultiplexer(MDM)-Einrichtung, z.B. 36, 37, mit wenigstens einem Uplink-Anschluss, z.B. 49, 49', der mit der zentralen Steuereinheit in Kommunikationsverbindung steht, mehreren Downlink-Anschlüssen, z.B. 51, 51', die jeweils mit einer REA-Einrichtung einer zugeordneten Leistungszelle 22 direkt verbunden sind, und einem Kommunikationssteuerungs- und -verwaltungsmodul (CCM-Modul), z.B. 52, 52'. Das Verfahren enthält ferner den Schritt S2 des Empfangs eines Senderahmens (Tx) von der zentralen Steuereinheit an der wenigstens einen MDM-Einrichtung über den Uplink-Anschluss. Das Verfahren enthält ferner die Schritte S3 des Extrahierens von Informationen, die jeweilige Leistungszellen betreffen, aus dem empfangenen Senderahmen mit dem CMC-Modul und des Bereitstellens, S4, dieser Informationen an den den betreffenden Leistungszellen zugeordneten Downlink-Anschlüssen der wenigstens einen MDM-Einrichtung, um sie zu den REA-Einrichtungen der betreffenden Leistungszellen zu senden. Das Verfahren enthält ferner ein Empfangen, S5, von Rückmeldeinformationen von den angeschlossenen Leistungszellen über deren zugehörige REA-Einrichtungen an den Downlink-Anschlüssen der wenigstens einen MDM-Einrichtung Einfügen, S6, der empfangenen Rückmeldeinformationen in einen Empfangsrahmen (Rx) mit dem CMC-Modul und Bereitstellen, S7, des Empfangsrahmens an dem Uplink-Anschuss der wenigstens einen MDM-Einrichtung, um ihn zu der zentralen Steuereinheit zu senden.

Das Verfahren kann vorzugsweise für einen mehrphasigen Stromrichter, z.B. den Stromrichter 11 nach Fig. 2, eingerichtet sein, der mehrere Stromrichterzweige, z.B. 19a-f aufweist, wobei jeder Zweig eine Vielzahl von Leistungszellen, z.B. 22, aufweist und wobei jede Leistungszelle wenigstens ein Leistungshalbleiterschaltelement, z.B. T1-T4, vorzugsweise mehrere zu einer Brückenschaltung, z.B. 23, geschaltete Leistungshalbleiterschaltelemente aufweist.

In dem Steuerungsverfahren einer beliebigen vorstehend erwähnten Art kann die zentrale Steuereinheit Schaltbefehle an Aktuatoren bzw. Leistungshalbleiterschaltelemente der Leistungszellen senden und von den Leistungszellen zurückgesandte Messwerte von in den Leistungszellen vorgesehenen Sensoren empfangen.

Das CMC-Modul kann ferner aus den empfangenen Senderahmen Broadcast-Informationen extrahieren, die an alle angeschlossenen Leistungszellen gerichtet sind, und diese extrahierten Broadcast-Informationen an alle für jeweilige Leistungszellen bestimmten extrahierten Informationen anhängen und als neuen Senderahmen an die Leistungszellen senden.

Umgekehrt kann das CMC-Modul ferner alle von den angeschlossenen Leistungszellen empfangenen Rückmeldeinformationen gemeinsam mit Informationen, die das CMC-Modul vorausberechnet, in einen Empfangsrahmen einfügen und an dem Uplink-Anschluss bereitstellen.

In einer bevorzugten Ausführungsform des Steuerverfahrens, sind wenigstens zwei kaskadierte Ebenen von MDM-Einrichtungen, z.B. 36_{1...k} und 37_{1...l}, vorgesehen, zu denen wenigstens eine mit einer zentralen Steuereinheit direkt verbundene MDM-Einrichtung 36 einer ersten Ebene und mehrere MDM-Einrichtungen 37 einer zweiten oder weiteren Ebene gehören, die zwischen der wenigstens einen MDM-Einrichtung der ersten Ebene und den mehreren Leistungszellen geschaltet ist.

Das Verfahren kann ferner ein Bereitstellen einer zentralen Steuereinheit, z.B. 35, aufweisen, die eine Multi-Kern-CPU, z.B. 61, und mehrere Kommunikationsschnittstellen 63_{1...6} aufweisen kann, insbesondere wenn der Stromrichter eine Brückenkonfiguration mit mehreren Zweigen 19a-f aufweist, wobei jedem Zweig vorzugsweise ein einzelner CPU-Kern 62₁₋₆ der Multikern-CPU, eine einzelne Kommunikationsschnittstelle 63_{1...6}, eine einzelne MDM-Einrichtung 36_{1...6} der ersten Ebene und mehrere MDM-Einrichtungen 37_{1...l} der zweiten Ebene zugeordnet werden.

Das Verfahren kann ferner ein Bereitstellen einer Anzahl x von redundanten Leistungszellen in jedem Zweig des Stromrichters aufweisen, die über die Anzahl n von für einen Betrieb des Zweiges erforderlichen Leistungszellen hinausgehen, um im Falle eines Ausfalls einzelner Leistungszellen einen weiteren Betrieb des Stromrichters zu ermöglichen. Zusätzlich oder Alternativ kann auch eine redundante Steuereinheit, z.B. 64, für jeden Stromrichterzweig vorgesehen sein, die jeweils ein Duplikat eines jeweiligen CPU-Kerns 62₁₋₆ darstellt und mit der zugehörigen REA-Einrichtung des Stromrichterzweiges über einen weiteren Kommunikationsanschluss, z.B. 48, der REA-Einrichtung verbunden ist, um bedarfsweise im Falle eines Fehlers in der zentralen Steuereinheit 35 oder eines Fehlers in einer MDM-Einrichtung 36 bzw. 37 oder in einer Übertagungsstrecke die Steuerung der zugehörigen Leistungszellen des Stromrichterzweiges zu übernehmen.

Es sind eine Steuervorrichtung und ein Steuerverfahren für große Stromrichter 11 mit hoher Anzahl von Leistungszellen 22, die Leistungshalbleiterschaltelemente T1-T4 enthalten und die Befehle von einer zentralen Steuereinheit 35 empfangen und Informationen zu der zentralen Steuereinheit 35 senden, geschaffen. Die Steuervorrichtung 34 weist wenigstens eine Multiplexer/Demultiplexer(MDM)-Einrichtung 36, 37 auf, die einen Uplink-Anschluss 49, 49' zur Kommunikationsverbindung mit der zentralen Steuereinheit 35, mehrere Downlink-Anschlüsse 51, 51' zur Direktverbindung mit einer Kommunikationsschnittstelle 39 einer zugeordneten Leistungszelle 22 und ein Kommunikationssteuerungs- und -verwaltungsmodul 52, 52' aufweist. Das Kommunikationssteuerungs- und -verwaltungsmodul 52, 52' ist dazu eingerichtet, Informationen, die jeweilige nachgeschaltete Leistungszellen 22 betreffen, aus einem von der zentralen Steuereinheit 35 über den Uplink-Anschluss 49, 49' empfangenen Senderahmen 53 zu extrahieren und dem jeweiligen Downlink-Anschluss 51, 51' für die betreffende Leistungszelle 22 zuzuführen und von jeweiligen Leistungszellen 22 erhaltene Rückmeldeinformationen in einen Empfangsrahmen 56 einzufügen und über den Uplink-Anschluss 49, 49' zu der zentralen Steuereinheit 35 zu senden.

## Patentansprüche

1. Steuervorrichtung für einen Stromrichter (11), der eine Anzahl von Leistungszellen (22) aufweist, die jeweils wenigstens ein Leistungshalbleiterschaltelement (T1-T4) und eine Remote-Ein-/Ausgabe(E/A)-Einrichtung (38) zur Kommunikation mit einer zentralen Steuereinheit (35) aufweisen, um von der zentralen Steuereinheit (35) Informationen, einschließlich Befehle zum Schalten des wenigstens einen Leistungshalbleiterschaltelementes (T1-T4) zu empfangen und Rückmeldeinformationen von der Leistungszelle (22) an die zentrale Steuereinheit (35) zu senden, **dadurch gekennzeichnet, dass** die Steuervorrichtung aufweist:
wenigstens eine Multiplexer/Demultiplexer(MDM)-Einrichtung (36, 37), die einen Uplink-Anschluss (49, 49') zur Verbindung mit der zentralen Steuereinheit (35), mehrere Downlink-Anschlüsse (51, 51') zur Direktverbindung mit jeweils einer Remote-E/A-Einrichtung (38) einer zugeordneten Leistungszelle (22) und ein Kommunikationssteuerungs- und -verwaltungsmodul (52, 52') aufweist, das dazu eingerichtet ist, Informationen, die jeweilige Leistungszellen (22) betreffen, aus einem von der zentralen Steuereinheit (35) über den Uplink-Anschluss (49, 49') empfangenen Senderahmen (53) zu extrahieren und dem jeweiligen Downlink Anschluss (51, 51') für die betreffende Leistungszelle (22) zuzuführen und von jeweiligen Leistungszellen (22) erhaltene Rückmeldeinformationen in einen Empfangsrahmen (57) einzufügen und über den Uplink-Anschluss (49, 49') zu der zentralen Steuereinheit (35) zu senden.

2. Steuervorrichtung nach Anspruch 1, wobei die Steuervorrichtung (34) für einen mehrphasigen Stromrichter (11) eingerichtet ist, der eine der Anzahl von Phasen entsprechende Anzahl von Phasenzweigen (21a-c) aufweist, wobei jeder Phasenzweig (21a-c) einen ersten und einen zweiten Zweig (19a,b; 19c,d; 19d,e) aufweist, die in Reihe miteinander verbunden zwischen einem ersten und einem zweiten Gleichspannungsanschluss (17, 18) angeschlossen sind, wobei der Verbindungspunkt zwischen den Zweigen (19a,b; 19c,d; 19d,e) einen Wechselspannungsanschluss (33a-c) des jeweiligen Phasenzweiges bildet und wobei jeder Zweig (19a-f) eine Vielzahl von Leistungszellen (22) aufweist, wobei jede Leistungszelle (22) wenigstens ein Leistungshalbleiterschaltelement (T1-T4) aufweist.

3. Steuervorrichtung nach Anspruch 2, wobei die Leistungszelle (22) eine H-Brückenschaltung (23) mit einem ersten und einem zweiten Leistungshalbleiterzweig (26, 27) aufweist, wobei jeder Leistungshalbleiterzweig (26, 27) eine zwischen Gleichspannungsklemmen (28, 29) der Brückenschaltung (23) angeschlossene Reihenschaltung aus wenigstens einem ersten und wenigstens einem zweiten Leistungshalbleiterschalter (T1, T2; T3, T4) aufweist, deren Verbindungspunkt eine Wechselspannungsklemme (31, 32) der Brückenschaltung (23) bildet.

4. Steuervorrichtung nach einem der vorhergehenden Ansprüche, zu der ferner die Remote-E/A-Einrichtungen (38) der angeschlossenen Leistungszellen (22) gehören, wobei die Remote-E/A-Einrichtungen (38) eine Kommunikationsschnittstelle (39), die angeschlossen und eingerichtet ist, um von der zentralen Steuereinheit (35) empfangene Schaltbefehle an Leistungshalbleiterschalter (T1-T4) der zugehörigen Leistungszelle (22) zu senden und als Rückmeldungen Messwerte von Sensoren der Leistungszelle (22) zu empfangen und an die zentrale Steuereinheit (35) weiterzuleiten.

5. Steuervorrichtung nach einem der vorhergehenden Ansprüche, wobei das Kommunikationssteuerungs- und -verwaltungsmodul (52, 52') ferner dazu eingerichtet ist, aus dem empfangenen Senderahmen (53) Broadcast-Informationen (BC) zu extrahieren, die an alle angeschlossenen Leistungszellen (22) gerichtet sind, und diese extrahierten Broadcast-Informationen (BC) an alle für jeweilige Leistungszellen (22) bestimmten, extrahierten Informationen (T-DLi) anzuhängen und als neuen Senderahmen (54) an die Leistungszellen (22) zu senden.

6. Steuervorrichtung nach einem der vorhergehenden Ansprüche, wobei das Kommunikationssteuerungs- und -verwaltungsmodul (52, 52') ferner dazu eingerichtet ist, alle von den angeschlossenen Leistungszellen (22) empfangenen Rückmeldeinformationen (R-RIOi) gemeinsam mit Informationen (PC), die durch das Kommunikationssteuerungs- und -verwaltungsmodul (52, 52') vorausberechnet werden, in einen neuen Empfangsrahmen (57) einzufügen und an dem Uplink-Anschluss (49, 49') bereitzustellen.

7. Steuervorrichtung nach einem der vorhergehenden Ansprüche, wobei sie wenigstens zwei kaskadierte Ebenen von MDM-Einrichtungen (36, 37) mit wenigstens einer mit einer zentralen Steuereinheit (35) direkt verbundenen MDM-Einrichtung (36_{i...k}) in einer ersten Ebene und mehreren MDM-Einrichtungen (37_{i...l}) in einer zweiten oder weiteren Ebene, die zwischen der MDM-Einrichtung (36_{i...k}) der ersten Ebene und mehreren Leistungszellen (22) geschaltet ist.

8. Steuervorrichtung nach einem der vorhergehenden Ansprüche, wobei sie ferner eine zentrale Steuereinheit (35) aufweist, die eine Multikern-CPU (61) und mehrere Kommunikationsschnittstellen (63_{1...8}) aufweist, wobei der Stromrichter (11) eine Brückenkonfiguration mit mehreren Zweigen (19a-f) aufweist und wobei jedem Zweig (19a-f) ein einzelner CPU-Kern (62_{1...6}) der Multikern-CPU (61) und eine einzelne Kommunikationsschnittstelle (63_{1...6}) zugeordnet sind.

9. Steuervorrichtung nach Anspruch 8, wobei die Multikern-CPU (61) ferner wenigstens einen zusätzlichen CPU-Kern (62₇, 62₈) für zentrale Steuerungsaufgaben und Systemaufgaben aufweist.

10. Steuervorrichtung nach Anspruch 8 oder 9, wobei jeder Zweig (19a-f) eine Anzahl (x) von redundanten Leistungszellen (22) aufweist.

11. Steuervorrichtung nach einem der Ansprüche 8-10, wobei sie eine redundante Steuereinheit (64) aufweist, die mit allen Remote-E/A-Einrichtungen (38) von Leistungszellen (22) eines Zweiges (19a-f) des Stromrichters (11) über eine weitere Kommunikationsschnittstelle (48) der Remote-E/A-Einrichtungen (38) verbunden sind, um bedarfsweise im Falle eines Fehlers in der zentralen Steuereinheit (35) oder eines Fehlers in einer MDM-Einrichtung (36; 37) oder in einer Übertagungsstrecke die Steuerung der zugehörigen Leistungszellen (22) zu übernehmen.

12. Steuervorrichtung nach einem der vorhergehenden Ansprüche, wobei die Remote-E/A-Einrichtungen (38) und die MDM-Einrichtungen (36, 37) jeweils in Hardware oder vorzugsweise als FPGAs implementiert sind, Verbindungs- bzw. Kommunikationsleitungen als Kupfer- oder Glasfaserleitungen realisiert und die Uplink- und Downlink-Anschlüsse (49, 51; 49', 51') und Kommunikationsschnittstellen (39, 48, 63_{1...6}) jeweils als Gigabit-Ethernet-Schnittstellen ausgebildet sind.

13. Verfahren zur Steuerung eines Stromrichters (11), der eine Anzahl von Leistungszellen (22) aufweist, die jeweils wenigstens ein Leistungshalbleiterschaltelement (T1-T4) und eine Remote-Ein-/Ausgabe(E/A)-Einrichtung (38) zur Kommunikation mit einer zentralen Steuereinheit (35) aufweisen, um von der zentralen Steuereinheit (35) Informationen, einschließlich Befehle zum Schalten des wenigstens einen Leistungshalbleiterschaltelementes (T1-T4) zu empfangen und Rückmeldeinformationen von der Leistungszelle (22) an die zentrale Steuereinheit (35) zu senden, wobei das Verfahren aufweist:
Bereitstellen (S1) wenigstens einer Multiplexer/Demultiplexer(MDM)-Einrichtung (36, 37), die einen Uplink-Anschluss (49, 49'), der mit der zentralen Steuereinheit (35) in Kommunikationsverbindung steht, mehrere Downlink-Anschlüsse (51, 51'), die jeweils mit einer Remote-E/A-Einrichtung (38) einer zugeordneten Leistungszelle (22) direkt verbunden sind, und ein Kommunikationssteuerungs- und -verwaltungsmodul (52, 52') aufweist;
Empfangen (S2) eines Senderahmens (53) von der zentralen Steuereinheit (35) an der wenigstens einen MDM-Einrichtung (36, 37) über den Uplink-Anschluss (49, 49');
Extrahieren (S3) von Informationen, die jeweilige Leistungszellen (22) betreffen, aus dem empfangenen Senderahmen (53) mit dem Kommunikationssteuerungs- und -verwaltungsmodul (52, 52') und Bereitstellen (S4) der jeweiligen Informationen an den den betreffenden Leistungszellen (22) zugeordneten Downlink-Anschlüssen (51, 51') der wenigstens einen MDM-Einrichtung (36, 37), um sie zu den Remote-E/A-Einrichtungen (38) der betreffenden Leistungszellen (22) zu senden;
Empfangen (S5) von Rückmeldeinformationen von den angeschlossenen Leistungszellen (22) über deren zugehörige Remote-E/A-Einrichtungen (38) an den Downlink-Anschlüssen (51, 51') der wenigstens einen MDM-Einrichtung (36, 37); und
Einfügen (S6) der empfangenen Rückmeldeinformationen in einen Empfangsrahmen (57) mit dem Kommunikationssteuerungs- und -verwaltungsmodul (52, 52') und Bereitstellen (S7) des Empfangsrahmens (57) an dem Uplink-Anschluss (49, 49') der wenigstens einen MDM-Einrichtung (36, 37), um ihn zu der zentralen Steuereinheit (35) zu senden.

14. Verfahren nach Anspruch 13, wobei der Stromrichter (11) ein mehrphasiger Stromrichter (11) ist, der mehrere Stromrichterzweige (19a-f) aufweist, wobei jeder Zweig (19a-f) eine Vielzahl von Leistungszellen (22) aufweist und wobei jede Leistungszelle (22) wenigstens ein Leistungshalbleiterschaltelement (T1-T4), vorzugsweise mehrere zu einer Brückenschaltung (23) geschaltete Leistungshalbleiterschaltelemente aufweist.

15. Verfahren nach Anspruch 13 oder 14, wobei die zentrale Steuereinheit (35) Schaltbefehle an Leistungshalbleiterschalterelemente (T1-T4) der Leistungszellen (22) sendet und die Leistungszellen (22) aktuelle Messwerte von Sensoren als Rückmeldungen an die zentrale Steuereinheit (35) zurücksenden.

16. Verfahren nach einem der Ansprüche 13-15, wobei das Kommunikationssteuerungs- und -verwaltungsmodul (52, 52') ferner aus dem empfangenen Senderahmen (53) Broadcast-Informationen (BC) extrahiert, die an alle angeschlossenen Leistungszellen (22) gerichtet sind, und diese extrahierten Broadcast-Informationen (BC) an alle für jeweilige Leistungszellen (22) bestimmten, extrahierten Informationen (T-DLi) anhängt und als neuen Senderahmen (54) an die Leistungszellen (22) sendet.

17. Verfahren nach einem der Ansprüche 13-16, wobei das Kommunikationssteuerungs- und -verwaltungsmodul (52, 52') ferner alle von den angeschlossenen Leistungszellen (22) empfangenen Rückmeldeinformationen (R-RIOi) gemeinsam mit Informationen (PC), die das Kommunikationssteuerungs- und -verwaltungsmodul (52, 52') vorausberechnet, in einen neuen Empfangsrahmen (57) einfügt und an dem Uplink-Anschluss (49, 49') bereitstellt.

18. Verfahren nach einem der Ansprüche 13-17, wobei wenigstens zwei kaskadierte Ebenen von MDM-Einrichtungen (36, 37) bereitgestellt werden, zu denen wenigstens eine mit einer zentralen Steuereinheit (35) direkt verbundene MDM-Einrichtung (36_{1...k}) in einer ersten Ebene und mehrere MDM-Einrichtungen (37_{1...l}) in einer zweiten oder weiteren Ebene gehören, die zwischen der MDM-Einrichtung (36_{1...k}) der ersten Ebene und mehreren Leistungszellen (22) geschaltet ist.

19. Verfahren nach Anspruch 18, das ferner ein Bereitstellen einer zentralen Steuereinheit (35) aufweist, die eine Multikern-CPU (61) und mehrere Kommunikationsschnittstellen (63_{1...6}) aufweist, wobei der Stromrichter (11) eine Brückenkonfiguration mit mehreren Zweigen (19a-f) aufweist und wobei jedem Zweig (19a-f) ein einzelner CPU-Kern (62_{1...6}) der Multikern-CPU (61), eine einzelne Kommunikationsschnittstelle (63_{1...6}), eine einzelne MDM-Einrichtung (36_{1...k}) der ersten Ebene und mehrere MDM-Einrichtungen (37_{1...l}) der zweiten oder weiteren Ebene zugeordnet werden.

20. Verfahren nach Anspruch 19, das ferner ein Bereitstellen einer Anzahl (x) von redundanten Leistungszellen (22) in jedem Zweig (19a-f) des Stromrichters (22), die über die Anzahl (n) von für einen Betrieb des Zweiges (19a-f) erforderlichen Leistungszellen (22) hinausgehen, und/oder ein Bereitstellen einer redundanten Steuereinheit (64) aufweist, die mit allen Remote-E/A-Einrichtungen (38) eines Zweiges (19a-f) des Stromrichters (11) über eine weitere Kommunikationsschnittstelle (48) der Remote-E/A-Einrichtungen (38) verbunden sind, um bedarfsweise im Falle eines Fehlers in der zentralen Steuereinheit (35) oder eines Fehlers in einer MDM-Einrichtung (36; 37) oder in einer Übertagungsstrecke die Steuerung der zugehörigen Leistungszellen (22) zu übernehmen.

## Claims

1. Control device for a power converter (11) which has a plurality of power cells (22), each of which comprise at least one power semiconductor switch element (T1-T4) and a remote input/output (I/O) device (38) for communication with a central control unit (35) in order to receive information from the central control unit (35), including commands for switching the at least one power semiconductor switch element (T1-T4), and to transmit feedback information from the power cell (22) to the central control unit (35), **characterised in that** the control device comprises:
at least one multiplexer/demultiplexer (MDM) device (36, 37) which has an uplink port (49, 49') for connection to the central control unit (35), several downlink ports (51, 51') for direct connection to a respective remote I/O device (38) of an assigned power cell (22), and a communication control and management module (52, 52') which is configured to extract information concerning the respective power cells (22) from a transmission frame (53) received from the central control unit (35) via the uplink port (49, 49') and supply this to the respective downlink port (51, 51') for the respective power cell (22), and insert feedback information obtained from the respective power cells (22) in a reception frame (57) and transmit this to the central control unit (35) via the uplink port (49, 49').

2. Control device according to claim 1, wherein the control device (34) is configured for a multiphase power converter (11) which has a plurality of phase branches (21a-c) corresponding to the number of phases, wherein each phase branch (21a-c) has a first and a second branch (19a,b; 19c,d; 19d;e) which are connected together in series between a first and a second DC voltage port (17, 18), wherein the connection point between the branches (19a,b; 19c,d; 19d;e) forms an AC voltage port (33a-c) of the respective phase branch, and wherein each branch (19a-f) has a plurality of power cells (22), wherein each power cell (22) comprises at least one power semiconductor switch element (T1-T4).

3. Control device according to claim 2, wherein the power cell (22) has an H-bridge circuit (23) with a first and a second power semiconductor branch (26, 27), wherein each power semiconductor branch (26, 27) has a series circuit, connected between DC voltage terminals (28, 29) of the bridge circuit (23), of at least one first and at least one second power semiconductor switch (T1, T2; T3, T4), the connecting point of which forms an AC voltage terminal (31, 32) of the bridge circuit (23).

4. Control device according to any of the preceding claims, which furthermore includes the remote I/O devices (38) of the connected power cells (22), wherein the remote I/O devices (38) [comprise¹] a communication interface (39) which is connected and configured to transmit switch commands received from the central control unit (35) to power semiconductor switches (T1 - T4) of the associated power cell (22) and to receive in response measurement values from sensors of the power cell (22) and pass these on to the central control unit (35).
¹ *Translator's note:*
*The verb is missing in the original German.*

5. Control device according to any of the preceding claims, wherein the communication control and management module (52, 52') is furthermore configured to extract from the received transmission frame (53) broadcast information (BC) which is directed at all connected power cells (22), and to attach this extracted broadcast information (BC) to all extracted information (T-DLi) intended for the respective power cells (22) and transmit this as a new transmission frame (54) to the power cells (22).

6. Control device according to any of the preceding claims, wherein the communication control and management module (52, 52') is furthermore configured to insert all feedback information (R-RIOi) received from the connected power cells (22), together with information (PC) precalculated by the communication control and management module (52, 52'), into a new reception frame (57) and provide this at the uplink port (49, 49').

7. Control device according to any of the preceding claims, wherein this [comprises¹] at least two cascaded levels of MDM devices (36, 37) with at least one MDM device (36_{i...k}) directly connected to a central control unit (35) in a first level and several MDM devices (37_{i...l}) in a second or further level which is connected between the MDM device (36_{i...k}) of the first level and several power cells (22).

8. Control device according to any of the preceding claims wherein it furthermore comprises a central control unit (35) which has a multicore CPU (61) and several communication interfaces (63_{1...8}), wherein the power converter (11) comprises a bridge configuration with several branches (19a-f) and wherein each branch (19a-f) is assigned a single CPU core (62_{1...6}) of the multicore CPU (61) and a single communication interface (63_{1...6}).

9. Control device according to claim 8, wherein the multicore CPU (61) furthermore comprises at least one additional CPU core (62₇, 62₈) for central control tasks and system tasks.

10. Control device according to claim 8 or 9, wherein each branch (19a-f) comprises a number (x) of redundant power cells (22).

11. Control device according to any of claims 8 to 10, wherein this has a redundant control unit (64) which is connected to all remote I/O devices (38) of power cells (22) of a branch (19a-f) of the power converter (11) via a further communication interface (48) of the remote I/O devices (38) in order, if necessary, to take control of the associated power cells (22) in the case of a fault in the central control unit (35) or a fault in an MDM device (36; 37) or in a transmission path.

12. Control device according to any of the preceding claims, wherein the remote I/O devices (38) and the MDM devices (36, 37) are each implemented in hardware or preferably as FPGAs, the connection or communication lines are formed as copper or glass fibre lines, and the uplink and downlink ports (49, 51; 49', 51') and communication interfaces (39, 48, 63_{1...6}) are each formed as gigabit ethernet interfaces.

13. Method for controlling a power converter (11) which has a number of power cells (22), which each comprise at least one power semiconductor switch element (T1-T4) and a remote input/output (I/O) device (38) for communication with a central control unit (35) in order to receive information from the central control unit (35), including commands for switching the at least one power semiconductor switch element (T1-T4), and to transmit feedback information from the power cell (22) to the central control unit (35), wherein the method comprises:
- provision (S1) of at least one multiplexer/demultiplexer (MDM) device (36, 37) which has an uplink port (49, 49') which is in communication connection with the central control unit (35), several downlink ports (51, 51') which are each directly connected to a remote I/O device (38) of an assigned power cell (22), and a communication control and management module (52, 52');
- reception (S2) of a transmission frame (53) from the central control unit (35) at the at least one MDM device (36, 37) via the uplink port (49, 49');
- extraction (S3) of information concerning the respective power cells (22) from the received transmission frame (52) with the communication control and management module (52, 52'), and provision (S4) of the respective information at the downlink ports (51, 51') of the at least one MDM device (36, 37) assigned to the respective power cells (22), in order to transmit this to the remote I/O devices (38) of the respective power cells (22);
- reception (S5) of feedback information from the connected power cells (22) via their associated remote I/O devices (38) at the downlink ports (51, 51') of the at least one MDM device (36, 37); and
- insertion (S6) of the received feedback information in a reception frame (57) with the communication control and management module (52, 52'), and provision (S7) of the reception frame (57) at the uplink port (49, 49') of the at least one MDM device (36, 37) in order to transmit this to the central control unit (35).

14. Method according to claim 13, wherein the power converter (11) is a multiphase power converter (11) which has a plurality of power converter branches (19a-f), wherein each branch (19a-f) has a plurality of power cells (22) and wherein each power cell (22) comprises at least one power semiconductor switch element (T1-T4), preferably several power semiconductor switch elements connected into a bridge circuit (23).

15. Method according to claim 13 or 14, wherein the central control unit (35) transmits switch commands to power semiconductor switch elements (T1-T4) of the power cells (22), and the power cells (22) send back actual measurement values of sensors as feedback to the central control unit (35).

16. Method according to any of claims 13 to 15, wherein the communication control and management module (52, 52') furthermore extracts from the received transmission frame (53) broadcast information (BC) which is directed at all connected power cells (22), and attaches this extracted broadcast information (BC) to all extracted information (T-DLi) intended for the respective power cells (22), and transmits it as a new transmission frame (54) to the power cells (22).

17. Method according to any of claims 13 to 16, wherein the communication control and management module (52, 52') is furthermore configured to insert all feedback information (R-RIOi) received from the connected power cells (22) together with information (PC) precalculated by the communication control and management module (52, 52') in a new reception frame (57) and provide this at the uplink port (49, 49').

18. Method according to any of claims 13 to 17, wherein at least two cascaded levels of MDM devices (36, 37) are provided, which include at least one MDM device (36_{1...k}) directly connected to a central control unit (35) in a first level and several MDM devices (37_{1...l}) in a second or further level which is connected between the MDM device (36_{1...k}) of the first level and several power cells (22).

19. Method according to claim 18, which furthermore comprises the provision of a central control unit (35) which has a multicore CPU (61) and several communication interfaces (63_{1...6}), wherein the power converter (11) comprises a bridge configuration with several branches (19a-f) and wherein each branch (19a-f) is assigned a single CPU core (62_{1...6}) of the multicore CPU (61), a single communication interface (63_{1...6}), a single MDM device (36_{1...k}) of the first level and several MDM devices (37_{1...l}) of the second or further level.

20. Method according to claim 19, which furthermore comprises a provision of a number (x) of redundant power cells (22) in each branch (19a-f) of the power converter (11), which number exceeds the number (n) of power cells (22) necessary for operation of the branch (19a-f), and/or a provision of a redundant control unit (64) which is connected to all remote I/O devices (38) of a branch (19a-f) of the power converter (11) via a further communication interface (48) of the remote I/O devices (38) in order, if necessary, to take control of the associated power cells (22) in the case of a fault in the central control unit (35) or a fault in an MDM device (36; 37) or in a transmission path.

## Revendications

1. Dispositif de commande pour un convertisseur de courant (11) qui présente un certain nombre de cellules de puissance (22) qui comportent chacune au moins un élément de commutation à semi-conducteur de puissance (T1 à T4) et un dispositif d'entrée-sortie (ES) à distance (38) pour la communication avec une unité de commande centrale (35), afin de recevoir des informations de l'unité de commande centrale (35), y compris des ordres pour la commutation de l'élément de commutation à semi-conducteur de puissance (T1 à T4), au nombre d'au moins un, et d'envoyer des informations de retour depuis la cellule de puissance (22) à l'unité de commande centrale (35), **caractérisé en ce que** le dispositif de commande présente :
au moins un dispositif multiplexeur-démultiplexeur (MDM) (36, 37) qui comprend une connexion de liaison montante (49, 49') pour la liaison avec l'unité de commande centrale (35), plusieurs connexions de liaison descendante (51, 51') pour la liaison directe respectivement avec un dispositif E-S à distance (38) d'une cellule de puissance (22) associée, et un module de commande et de gestion de communication (52, 52') qui est conçu pour extraire des informations, concernant les cellules de puissance (22) respectives, d'une trame d'émission (53) reçue de l'unité de commande centrale (35), par l'intermédiaire de la connexion de liaison montante (49, 49'), et les acheminer à la connexion de liaison descendante (51, 51') respective pour la cellule de puissance (22) concernée, et pour insérer dans une trame de réception (57) des informations de retour reçues de cellules de puissance (22) respectives et les envoyer à l'unité de commande centrale (35), par l'intermédiaire de la connexion de liaison montante (49, 49').

2. Dispositif de commande selon la revendication 1, dans lequel le dispositif de commande (34) est conçu pour un convertisseur de courant (11) polyphasé qui présente un nombre de branches de phase (21a à c) correspondant au nombre de phases, chaque branche de phase (21a à c) comportant une première et une deuxième branche (19a, b ;19c, d ; 19d, e) qui sont reliées entre elles en série et sont connectées entre une première et une deuxième borne de tension continue (17, 18), le point de connexion entre les branches (19a, b ; 19c, d ; 19d, e) constituant une borne de tension alternative (33a à c) de la branche de phase respective, et chaque branche (19a à f) présentant une pluralité de cellules de puissance (22), chaque cellule de puissance (22) comportant au moins un élément de commutation à semi-conducteur de puissance (T1 à T4).

3. Dispositif de commande selon la revendication 2, dans lequel la cellule de puissance (22) présente un montage en pont en H (23) avec une première et une deuxième branche à semi-conducteur de puissance (26, 27), chaque branche à semi-conducteur de puissance (26, 27) présentant un montage en série raccordé entre des bornes de tension continue (28, 29) du montage en pont (23) et constitué d'au moins un premier et d'au moins un deuxième commutateur à semi-conducteur de puissance (T1, T2 ; T3, T4) dont le point de connexion constitue une borne de tension alternative (31, 32) du montage en pont (23).

4. Dispositif de commande selon une des revendications précédentes, qui comprend en outre les dispositifs E-S à distance (38) des cellules de puissance (22) raccordées, sachant que les dispositifs E-S à distance (38) présentent une interface de communication (39) qui est connectée et conçue pour transmettre des ordres de commutation, reçus de l'unité de commande centrale (35), à des commutateurs à semi-conducteur de puissance (T1 à T4) de la cellule de puissance (22) associée et recevoir, en tant qu'informations de retour, des valeurs de mesure de capteurs de la cellule de puissance (22) et les transmettre à l'unité de commande centrale (35).

5. Dispositif de commande selon une des revendications précédentes, dans lequel le module de commande et de gestion de communication (52, 52') est en outre conçu pour extraire de la trame d'émission (53) reçue, des informations de diffusion (BC) qui sont adressées à toutes les cellules de puissance (22) raccordées, et pour attacher ces informations de diffusion (BC) extraites à toutes les informations (T-DLi) extraites, destinées à des cellules de puissance (22) respectives, et les transmettre en tant que nouvelle trame d'émission (54) aux cellules de puissance (22).

6. Dispositif de commande selon une des revendications précédentes, dans lequel le module de commande et de gestion de communication (52, 52') est en outre conçu pour insérer dans une nouvelle trame de réception (57) toutes les informations de retour (R-RIOi) reçues des cellules de puissance (22) raccordées, conjointement avec des informations (PC) qui sont calculées à l'avance par le module de commande et de gestion de communication (52, 52'), et les mettre à disposition sur la connexion de liaison montante (49, 49').

7. Dispositif de commande selon une des revendications précédentes, sachant qu'il présente au moins deux niveaux en cascade de dispositifs MDM (36, 37), avec au moins un dispositif MDM (36_{1...k}), relié directement à une unité de commande centrale (35), dans un premier niveau, et plusieurs dispositifs MDM (37_{1...l}) dans un deuxième niveau ou des niveaux supplémentaires, qui sont intercalés entre le dispositif MDM (36_{1...k}) du premier niveau et plusieurs cellules de puissance (22).

8. Dispositif de commande selon une des revendications précédentes, sachant qu'il présente en outre une unité de commande centrale (35) qui comporte une UC multi-coeur (61) et plusieurs interfaces de communication (63_{1...6}), le convertisseur de courant (11) présentant une configuration en pont avec plusieurs branches (19a à f), et un coeur UC (62_{1...6}) individuel de l'UC multi-coeur (61) et une interface de communication (63_{1...6}) individuelle étant associés à chaque branche (19a à f).

9. Dispositif de commande selon la revendication 8, dans lequel l'UC multi-coeur (61) présente en outre au moins un coeur UC (62₇, 62₈) supplémentaire pour des tâches de commande et des tâches système centrales.

10. Dispositif de commande selon la revendication 8 ou 9, dans lequel chaque branche (19a à f) présente un certain nombre (x) de cellules de puissance (22) redondantes.

11. Dispositif de commande selon une des revendications 8 à 10, sachant qu'il présente une unité de commande (64) redondante qui est reliée à tous les dispositifs E-S à distance (38) de cellules de puissance (22) d'une branche (19a à f) du convertisseur de courant (11), par l'intermédiaire d'une interface de communication (48) supplémentaire des dispositifs E-S à distance (38), afin d'assurer la commande des cellules de puissance (22) associées, si cela est nécessaire en cas d'erreur dans l'unité de commande centrale (35) ou en cas d'erreur dans un dispositif MDM (36 ; 37) ou dans une voie de transmission.

12. Dispositif de commande selon une des revendications précédentes, dans lequel les dispositifs E-S à distance (38) et les dispositifs MDM (36, 37) sont mis en oeuvre respectivement sous forme de matériel ou de préférence comme FPGA, les lignes de liaison ou de communication sont réalisées comme lignes en cuivre ou en fibres optiques, et les connexions de liaison montante et descendante (49, 51 ; 49', 51') et les interfaces de communication (39, 48, 63_{1...6}) sont réalisées respectivement comme interfaces Gigabit Ethernet.

13. Procédé de commande d'un convertisseur de courant (11) qui présente un certain nombre de cellules de puissance (22) qui comportent chacune au moins un élément de commutation à semi-conducteur de puissance (T1 à T4) et un dispositif d'entrée-sortie (ES) à distance (38) pour la communication avec une l'unité de commande centrale (35), afin de recevoir des informations de l'unité de commande centrale (35), y compris des ordres pour la commutation de l'élément de commutation à semi-conducteur de puissance (T1 à T4), au nombre d'au moins un, et d'envoyer des informations de retour depuis la cellule de puissance (22) à l'unité de commande centrale (35), le procédé comprenant :
la mise en place (S1) d'au moins un dispositif multiplexeur-démultiplexeur (MDM) (36, 37) présentant une connexion de liaison montante (49, 49'), qui est en liaison de communication avec l'unité de commande centrale (35), plusieurs connexions de liaison descendante (51, 51'), qui sont chacune reliées directement à un dispositif ES à distance (38) d'une cellule de puissance (22) associée, et un module de commande et de gestion de communication (52, 52') ;
la réception (S2) d'une trame d'émission (53) depuis l'unité de commande centrale (35), à l'emplacement du dispositif MDM (36, 37), au nombre d'au moins un, par l'intermédiaire de la connexion de liaison montante (49, 49');
l'extraction (S3) d'informations concernant des cellules de puissance (22) respectives, à partir de la trame d'émission (53) reçue, avec le module de commande et de gestion de communication (52, 52'), et la mise à disposition (S4) des informations respectives aux connexions de liaison descendante (51, 51') du dispositif MDM (36, 37), au nombre d'au moins un, associées aux cellules de puissance (22) concernées, afin de les transmettre aux dispositifs E-S à distance (38) des cellules de puissance (22) concernées ;
la réception (S5) d'informations de retour depuis les cellules de puissance (22) raccordées, par l'intermédiaire de leurs dispositifs E-S à distance (38) associés, aux connexions de liaison descendante (51, 51') du dispositif MDM (36, 37), au nombre d'au moins un ; et
l'insertion (S6) des informations de retour reçues, dans une trame de réception (57), avec le module de commande et de gestion de communication (52, 52'), et mise à disposition (S7) de la trame de réception (57) à la connexion de liaison montante (49, 49') du dispositif MDM (36, 37), au nombre d'au moins un, afin de l'envoyer à l'unité de commande centrale (35).

14. Procédé selon la revendication 13, selon lequel le convertisseur de courant (11) est un convertisseur de courant (11) polyphasé qui présente plusieurs branches de convertisseur de courant (19a à f), chaque branche (19 à f) présentant une pluralité de cellules de puissance (22), et chaque cellule de puissance (22) comportant au moins un élément de commutation à semi-conducteur de puissance (T1 à T4), de préférence plusieurs éléments de commutation à semi-conducteur de puissance branchés pour former un montage en pont (23).

15. Procédé selon la revendication 13 ou 14, selon lequel l'unité de commande centrale (35) envoie des ordres de commutation à des éléments de commutation à semi-conducteur de puissance (T1 à T4) des cellules de puissance (22), et les cellules de puissance (22) renvoient les valeurs de mesure du moment des capteurs en tant qu'information de retour à l'unité de commande centrale (35).

16. Procédé selon une des revendications 13 à 15, selon lequel le module de commande et de gestion de communication (52, 52') extrait par ailleurs de la trame d'émission (53) reçue, des informations de diffusion (BC) qui sont adressées à toutes les cellules de puissance (22) raccordées, et attache ces informations de diffusion (BC) extraites à toutes les informations (T-DLi) extraites, destinées aux cellules de puissance (22) respectives, et les transmet en tant que nouvelle trame d'émission (54) aux cellules de puissance (22).

17. Procédé selon une des revendications 13 à 16, selon lequel le module de commande et de gestion de communication (52, 52') insère par ailleurs dans une nouvelle trame de réception (57) toutes les informations de retour (R-RIOi) reçues des cellules de puissance (22) raccordées, conjointement avec des informations (PC) qui sont calculées à l'avance par le module de commande et de gestion de communication (52, 52'), et les met à disposition sur la connexion de liaison montante (49, 49').

18. Procédé selon une des revendications 13 à 17, selon lequel on met en place au moins deux niveaux en cascade de dispositifs MDM (36, 37), dont font partie au moins un dispositif MDM (36_{1...k}), relié directement à une unité de commande centrale (35), dans un premier niveau, et plusieurs dispositifs MDM (37_{1...l}) dans un deuxième niveau ou des niveaux supplémentaires, qui sont intercalés entre le dispositif MDM (36_{1...k}) du premier niveau et plusieurs cellules de puissance (22).

19. Procédé selon la revendication 18, qui comprend en outre la mise en place d'une unité de commande centrale (35) qui comporte une UC multi-coeur (61) et plusieurs interfaces de communication (63_{1...6}), le convertisseur de courant (11) présentant une configuration en pont avec plusieurs branches (19a à f), et un coeur UC (62_{1...6}) individuel de l'UC multi-coeur (61), une interface de communication (63_{1...6}) individuelle, un dispositif MDM (37_{1...l}) individuel du premier niveau, et plusieurs dispositifs MDM (37_{1...l}) du deuxième niveau ou de niveaux supplémentaires étant associés à chaque branche (19a à f).

20. Procédé selon la revendication 19, qui comprend en outre la mise en place d'un nombre (x) de cellules de puissance (22) redondantes dans chaque branche (19a à f) du convertisseur de courant (22), qui dépasse le nombre (n) de cellules de puissance (22) nécessaires au fonctionnement de la branche (19a à f), et/ou la mise en place d'une unité de commande (64) redondante, qui est reliée à tous les dispositifs E-S à distance (38) d'une branche (19a à f) du convertisseur de courant (11), par l'intermédiaire d'une interface de communication (48) supplémentaire des dispositifs E-S à distance (38), afin d'assurer la commande des cellules de puissance (22) associées, si cela est nécessaire en cas d'erreur dans l'unité de commande centrale (35) ou en cas d'erreur dans un dispositif MDM (36 ; 37) ou dans une voie de transmission.
